# EUROPEAN PATENT APPLICATION

(11) **EP 4 538 886 A1**
(43) Date of publication of application: **16.04.2025**
(21) Application number: 23876519.2
(22) Date of filing: 25.09.2023
(51) Int. Cl.: G06F 9/54

(54) **APPLICATION CONTROL METHOD, ELECTRONIC DEVICE AND SYSTEM**

(30) Priority: 14.10.2022 CN 202211262525
(71) Applicant: Huawei Technologies Co., Ltd., Shenzhen, Guangdong 518129 (CN)
(72) Inventor: ZHANG, Fan, Shenzhen, Guangdong 518129 (CN)
(74) Representative: Pfenning, Meinig & Partner mbB
(86) International application number: PCT/CN2023/121177
(87) International publication number: WO 2024/078315

(57) **Abstract**

This application provides an application control method, an electronic device, and a system. The method includes: A first electronic device runs a first application. The first electronic device detects an invocation behavior of the first application to a second application on a second electronic device, and obtains control information of the first application. The first electronic device identifies an invocation permission of the first application based on the control information. When the first application does not have the permission to invoke the second application, the first electronic device terminates the invocation behavior of the first application to the second application. According to application of this method, an application that performs a cross-device invocation operation can be controlled. This resolves some problems in the conventional technology that exist when some applications perform a launch operation, a keep-alive operation, or the like on an application on another electronic device.

## Description

This application claims priority to Chinese Patent Application No. 202211262525.3, filed with the China National Intellectual Property Administration on October 14, 2022 and entitled "APPLICATION CONTROL METHOD, ELECTRONIC DEVICE, AND SYSTEM", which is incorporated herein by reference in its entirety.

### TECHNICAL FIELD

Embodiments of this application relate to the field of internet technologies, and in particular, to an application control method, an electronic device, and a system.

### BACKGROUND

A user may have a plurality of types of electronic devices, such as a mobile phone, a smartwatch, and a smart screen. A plurality of applications may be installed in each electronic device, and use scenarios and functions of each electronic device are different. In some scenarios, applications in different electronic devices may further coordinate with each other to implement some functions through cross-device invocation.

Although the cross-device invocation between the applications extends the use scenarios and the functions of the electronic devices, greater difficulties are brought to application management and control. Some applications may perform a launch operation, a keep-alive (keep-alive) operation, or the like on an application on another electronic device through cross-device invocation. This affects normal use of the electronic devices by the user.

### SUMMARY

This application provides an application control method, an electronic device, and a system, to control an application that performs a cross-device invocation operation. This resolves some problems in the conventional technology that exist when some applications perform a launch operation, a keep-alive operation, or the like on an application on another electronic device.

According to a first aspect, this application provides an application control method, including:

A first electronic device runs a first application.

The first electronic device detects an invocation behavior of the first application to a second application on a second electronic device, and obtains control information of the first application.

The first electronic device identifies an invocation permission of the first application based on the control information.

When the first application does not have the permission to invoke the second application, the first electronic device terminates the invocation behavior of the first application to the second application.

Compared with the conventional technology, this application has the following beneficial effects.

After the first electronic device establishes a cross-device communication connection to the second electronic device, the first electronic device may detect a running behavior of the local first application. If the first electronic device detects that the first application initiates a behavior of invoking the second application on the peer second electronic device, the first electronic device may identify, by obtaining the control information of the first application, whether the first application has the permission to invoke the second application. If the first application does not have the permission, the first electronic device may terminate the current behavior of invoking the second application by the first application. In this way, the first application cannot invoke the second application in a cross-device manner. According to application of this method, the first electronic device may allow the first application to initiate cross-device invocation on the basis of identifying that the first application has the cross-device invocation permission. In this way, some problems that may exist when some applications invoke another application in a cross-device manner can be resolved, and security of an electronic device and a running process of an application can be improved.

In a possible implementation of this application, in a running process of the first application, the first electronic device may detect, by using a distributed module, whether the first application initiates the invocation behavior to the second application. When detecting the invocation behavior of the first application to the second application on the second electronic device, the first electronic device may determine the control information of the first application by obtaining related information of the invocation behavior of the first application.

It should be understood that the related information of the invocation behavior may be information about each device or application involved in the invocation behavior initiated by the first application. For example, the related information of the invocation behavior may include one or more types of the following information: a device identifier of the first electronic device, a package name of the first application, a component name of the first application, a device identifier of the second electronic device, a package name of the second application, and a component name of the second application.

In a possible implementation of this application, the first electronic device may determine a plurality of types of control information based on the related information of the invocation behavior, and the control information may be used to identify whether the first application has the permission to invoke the second application. For example, the control information determined based on the related information of the invocation behavior may include one or more types of the following information: status information about whether the first application is run in a foreground or a background; information about whether the first application is the same as the second application; information about whether the first electronic device and the second electronic device are networked under a same account; and information about whether an interface for the first application to access the first electronic device and an interface for the second application to access the second electronic device each are an interface provided by a device control center of an operating system.

In a possible implementation of this application, that the first electronic device identifies an invocation permission of the first application based on the control information may specifically include: The first electronic device obtains a rule set, where any rule set has a corresponding processing result. The first electronic device performs matching on the rule set based on the control information. The first electronic device identifies the invocation permission of the first application based on a processing result corresponding to a matched rule set.

It should be understood that the rule set may include one or more types of information. For example, the rule set may include information indicating a security level of the first electronic device, and/or at least one type of control information indicating a status of the first application and/or the first electronic device. The first electronic device may match the obtained control information with the information in the rule set, to determine the matched rule set. Information included in the matched rule set is the same as the control information obtained by the first electronic device.

For example, the control information obtained by the first electronic device includes status information indicating that the first application is run in the foreground, information indicating that the first application and the second application are the same, information indicating that the first electronic device and the second electronic device are networked under the same account, and information indicating that the interface for the first application to access the first electronic device and the interface for the second application to access the second electronic device each are an interface provided by the device control center of the operating system. In this way, the information in the matched rule set may be information that is the same as the foregoing four types of information. Then, the first electronic device may identify the invocation permission of the first application based on the processing result of the matched rule set.

In a possible implementation of this application, the processing result corresponding to any rule set may include a first processing result or a second processing result. The first processing result may be that the first application is identified, based on information included in a corresponding rule set, not to have the permission to invoke the second application. The second processing result may be that the first application is identified, based on information included in a corresponding rule set, to have the permission to invoke the second application. Therefore, when the processing result of the matched rule set is that the first application has the permission to invoke the second application, the first electronic device may identify that the first application has the invocation permission; or when the processing result of the matched rule set is that the first application does not have the permission to invoke the second application, the first electronic device may identify that the first application does not have the invocation permission. Whether the first application has the invocation permission is identified based on the rule set, so that a unified permission identification standard can be ensured, and accuracy of permission identification can be improved.

In a possible implementation of this application, the first electronic device may identify the invocation permission of the first application by using a big data platform. For example, the big data platform may include an application distribution platform and/or a system management platform.

It should be understood that the application distribution platform may be an application market, an application download center, or the like in an electronic device, and the system management platform may be a system platform configured to uniformly manage an electronic device.

Therefore, when the first electronic device detects the invocation behavior of the first application to the second application on the second electronic device, the first electronic device may send related information of the first application to the big data platform. The related information may include a package name of the first application, a component name of the first application, and/or the like. The big data platform may identify the first application based on the received related information, and the first electronic device may receive the control information fed back by the big data platform. The control information may be information about whether the first application is an abnormal application that is obtained by the big data platform through identification.

In a possible implementation of this application, the control information fed back by the big data platform may include first control information or second control information. The first control information may be information indicating that the first application identified by the big data platform based on running information of the first application is an abnormal application. The second control information may be information indicating that the first application identified by the big data platform based on running information of the first application is not an abnormal application.

It should be understood that the running information may include running information of the first application on a plurality of electronic devices. For example, in a process of running the first application, the plurality of electronic devices may collect running information of the first application. The running information may include information about whether the first application invokes a second application on another electronic device in a cross-device manner. The plurality of electronic devices may send the running information of the first application to the big data platform, and the big data platform performs unified processing.

Therefore, when the first electronic device identifies the invocation permission of the first application based on the control information, the following may be included: When the control information fed back by the big data platform is the first control information, the first electronic device identifies that the first application does not have the permission to invoke the second application; or when the control information fed back by the big data platform is the second control information, the first electronic device identifies that the first application has the permission to invoke the second application.

In a possible implementation of this application, after the first electronic device detects the invocation behavior of the first application to the second application on the second electronic device, the first electronic device may detect a running status of the second application. When the first electronic device receives a message indicating that the second application stops running, the first electronic device may detect whether the first application initiates again an invocation behavior to the second application. The first electronic device may identify an association relationship between the first application and the second application based on whether the invocation behavior is detected; and the first electronic device may process, based on the association relationship, the invocation behavior that is initiated again by the first application.

It should be understood that the first electronic device may sense, by using the distributed module, a life cycle change of each application on the first electronic device and the second electronic device. For example, the first electronic device may receive, by using the distributed module, the message indicating that the second application on the second electronic device stops running.

In an example, the association relationship between the first application and the second application that is identified by the first electronic device may refer to whether the first application and the second application are applications that are mutually kept alive abnormally. If the first application has the association relationship with the second application, it may indicate that the first application and the second application are applications that are mutually kept alive abnormally. If the first application does not have the association relationship with the second application, it may indicate that the first application and the second application are not applications that are mutually kept alive abnormally.

In a possible implementation of this application, that the first electronic device identifies an association relationship between the first application and the second application based on the detected invocation behavior may specifically include: The first electronic device determines a quantity of times the first application initiates the invocation behavior to the second application within a monitoring time period; and when the quantity of times meets a threshold condition, the first electronic device may determine that the first application has the association relationship with the second application; or when the quantity of times does not meet the threshold condition, the first electronic device may determine that the first application does not have the association relationship with the second application.

When the first application has the association relationship with the second application, in other words, the first application and the second application are applications that are mutually kept alive abnormally, the first electronic device may terminate the invocation behavior that is initiated again by the first application to the second application. When the first application does not have the association relationship with the second application, in other words, the first application and the second application are not applications that are mutually kept alive abnormally, the first electronic device may allow the first application to initiate again the invocation behavior to the second application.

According to a second aspect, this application provides an application control apparatus, including a running module, an obtaining module, an identification module, and a termination module, where
the running module is configured to run a first application on a first electronic device;
the obtaining module is configured to: when the first electronic device detects an invocation behavior of the first application to a second application on a second electronic device, obtain control information of the first application;
the identification module is configured to identify an invocation permission of the first application based on the control information; and
the termination module is configured to: when the first application does not have the permission to invoke the second application, terminate the invocation behavior of the first application to the second application.

In a possible implementation of this application, the obtaining module may be specifically configured to: when the first electronic device detects the invocation behavior of the first application to the second application on the second electronic device, obtain related information of the invocation behavior; and determine the control information based on the related information.

It should be understood that the related information may include one or more types of the following information: a device identifier of the first electronic device, a package name of the first application, a component name of the first application, a device identifier of the second electronic device, a package name of the second application, and a component name of the second application.

The control information may include one or more of the following: status information about whether the first application is run in a foreground or a background; information about whether the first application is the same as the second application; information about whether the first electronic device and the second electronic device are networked under a same account; and whether an interface for the first application to access the first electronic device and an interface for the second application to access the second electronic device each are an interface provided by a device control center of an operating system.

In a possible implementation of this application, the identification module may be specifically configured to: obtain a rule set, where any rule set has a corresponding processing result; perform matching on the rule set based on the control information; and identify the invocation permission of the first application based on a processing result corresponding to a matched rule set.

In an example, the rule set may include information indicating a security level of the first electronic device, and at least one type of control information indicating a status of the first application and/or the first electronic device.

In a possible implementation of this application, the processing result corresponding to any rule set may include a first processing result or a second processing result. The identification module may be further configured to: when the processing result corresponding to the matched rule set is the first processing result, identify that the first application does not have the permission to invoke the second application; or when the processing result corresponding to the matched rule set is the second processing result, identify that the first application has the permission to invoke the second application.

In a possible implementation of this application, the obtaining module may be further configured to: when the first electronic device detects the invocation behavior of the first application to the second application on the second electronic device, send related information of the first application to a big data platform, where the related information may include a package name of the first application and/or a component name of the first application; and receive the control information fed back by the big data platform.

It should be understood that the big data platform may include an application distribution platform and/or a system management platform.

In another possible implementation of this application, the control information fed back by the big data platform may include first control information or second control information. The identification module may be further configured to: when the control information fed back by the big data platform is the first control information, identify that the first application does not have the permission to invoke the second application, where the first control information is information indicating that the first application identified by the big data platform based on running information of the first application is an abnormal application; or when the control information fed back by the big data platform is the second control information, identify that the first application has the permission to invoke the second application, where the second control information is information indicating that the first application identified by the big data platform based on running information of the first application is not an abnormal application, and the running information may include running information of the first application on a plurality of electronic devices.

In still another possible implementation of this application, the application control apparatus may further include a detection module, an association relationship identification module, and a processing module.

The detection module may be configured to: after the first electronic device detects the invocation behavior of the first application to the second application on the second electronic device, detect a running status of the second application; and when receiving a message indicating that the second application stops running, detect an invocation behavior that is initiated again by the first application to the second application.

The association relationship identification module may be configured to identify an association relationship between the first application and the second application based on the detected invocation behavior.

The processing module may be configured to process, based on the association relationship, the invocation behavior that is initiated again by the first application.

In a possible implementation of this application, the association relationship identification module may be specifically configured to: determine a quantity of times the first application initiates the invocation behavior to the second application within a monitoring time period; and when the quantity of times meets a threshold condition, determine that the first application has the association relationship with the second application; or when the quantity of times does not meet the threshold condition, determine that the first application does not have the association relationship with the second application.

In a possible implementation of this application, the processing module may be specifically configured to: when the first application has the association relationship with the second application, terminate the invocation behavior that is initiated again by the first application to the second application; or when the first application does not have the association relationship with the second application, allow the invocation behavior that is initiated again by the first application to the second application.

According to a third aspect, this application provides an electronic device. The electronic device may be the first electronic device in the first aspect, and includes a memory, a processor, and a computer program that is stored in the memory and that can be run on the processor. When the processor executes the computer program, the application control method according to any one of the first aspect may be implemented.

According to a fourth aspect, this application provides a system. The system may implement the application control method according to any one of the first aspect. Specifically, the system includes a first electronic device and at least one second electronic device, and the first electronic device may be configured to implement the application control method according to any one of the first aspect.

According to a fifth aspect, this application provides a computer-readable storage medium. The computer-readable storage medium stores computer instructions; and when the computer instructions are run on an electronic device, the electronic device is enabled to perform the application control method according to any one of the first aspect.

According to a sixth aspect, this application provides a computer program product. When the computer program product is run on a computer, the computer is enabled to perform related steps, to implement the application control method according to any one of the first aspect.

According to a seventh aspect, this application provides a chip. The chip includes a memory and a processor, and the processor executes a computer program stored in the memory, to implement the application control method according to any one of the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1(a)-1 to FIG. 1(b)-2 are diagrams of application scenarios of an application control method according to an embodiment of this application;
FIG. 2 is a diagram of a structure of an electronic device according to an embodiment of this application;
FIG. 3 is a block diagram of a software structure of an electronic device according to an embodiment of this application;
FIG. 4 is a diagram of an application control method according to an embodiment of this application;
FIG. 5 is a diagram of another application control method according to an embodiment of this application;
FIG. 6 is a diagram of still another application control method according to an embodiment of this application;
FIG. 7 is a schematic flowchart of steps of an application control method according to an embodiment of this application; and
FIG. 8 is a block diagram of a structure of an application control apparatus according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions and effects. For example, a first electronic device and a second electronic device are merely intended to distinguish between different electronic devices, and a first application and a second application are merely intended to distinguish between different applications on a same electronic device, or same or different applications on different electronic devices.

It should be noted that, in embodiments of this application, the term "example", "for example", or the like is used to represent giving an example, an illustration, or a description. Any embodiment or design scheme described as "example" or "for example" in embodiments of this application should not be explained as being more preferred or having more advantages than another embodiment or design scheme. To be precise, use of the term "example", "for example", or the like is intended to present a related concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Steps in an application control method provided in embodiments of this application are merely used as examples, and not all steps are mandatory. In a use process, the steps may be added or deleted as required.

A same step or steps or messages having a same function in embodiments of this application may be mutually referenced in different embodiments.

Generally, cross-device invocation of an application may be implemented based on a distributed capability provided by an operating system. Increasingly more manufacturers develop, based on the distributed capability provided by the operating system, a plurality of applications that can be applied to a distributed scenario. These applications may invoke an application on another device in a cross-device manner when being authorized, or be invoked by an application on another device. A first application on a first electronic device and a second application on a second electronic device are used as an example, cross-device invocation of an application may include: The first application on the first electronic device launches the second application on the second electronic device in a cross-device manner. Alternatively, after sensing that the second application on the second electronic device stops running, the first application on the first electronic device relaunches the second application on the second electronic device in a cross-device manner, to keep the second application on the second electronic device alive. Alternatively, after the first electronic device and the second electronic device are networked, the first application on the first electronic device detects that a specific second application is not installed on the second electronic device, and the first application downloads and installs the second application on the second electronic device in a cross-device manner, or the like.

It should be understood that the cross-device manner may be understood as an interaction behavior performed between at least two electronic devices, for example, the first electronic device and the second electronic device. The cross-device interaction behavior may include invoking, synchronizing, or transferring data, information, an application, or the like between at least two electronic devices. The cross-device interaction behavior may be initiated by one of the electronic devices, for example, the first electronic device. The cross-device interaction behavior initiated by the first electronic device may act on at least one another electronic device, for example, the second electronic device.

The cross-device invocation of an application extends use scenarios of various electronic devices and applications installed on the electronic devices. However, in some cases, the cross-device invocation of an application also provides an opportunity for some applications to invoke an application on another electronic device. That some applications invoke an application on another electronic device may mean that some applications on the first electronic device perform a launch operation, a keep-alive operation, a download and installation operation, or the like on an application on the second electronic device based on a feature of the distributed scenario. In an example, an application on the first electronic device may perform a launch operation, a keep-alive operation, a download and installation operation, or the like on an application on the second electronic device without being authorized.

For example, in a scenario, when performing outdoor fitness, a user uses a fitness app on a mobile phone. After the user goes home with the mobile phone, the mobile phone may be connected to a home network and network with a smart screen device in the home network. When detecting successful networking with the smart screen device, the fitness app on the mobile phone may attempt to launch a fitness app on the smart screen device in a cross-device manner. However, if the user does not want to launch the fitness app on the smart screen device in this case, unnecessary waste of resources of the smart screen device is caused.

In another scenario, the user browses news by using a news app on the mobile phone. After the user enters a vehicle with the mobile phone, the mobile phone may be connected to an in-vehicle network and network with an in-vehicle infotainment system in the in-vehicle network. When detecting successful networking with the in-vehicle infotainment system, the news app on the mobile phone may attempt to download and install a music app on the in-vehicle infotainment system in a cross-device manner. However, if the user does not want to install the music app on the in-vehicle infotainment system in this case, the cross-device invocation operation performed by the news app on the mobile phone is performed without authorization.

For various problems existing in the cross-device invocation between applications in the distributed scenario, an embodiment of this application provides an application control method. In this way, when an application initiates a cross-device invocation operation, whether the application has a corresponding invocation permission can be identified or controlled. This ensures security of the cross-device invocation between the applications. For example, after the first electronic device and the second electronic device are successfully networked to form the distributed scenario, when the first application installed on the first electronic device attempts to launch, in a cross-device manner, the second application installed on the second electronic device, the first electronic device may identify an operation of the first application by using this method. When the first application is identified as being able to launch the second application in a cross-device manner, the first electronic device may launch the second application on the second electronic device based on communication established with the second electronic device. When the first application is identified as being not allowed to launch the second application in a cross-device manner, the first electronic device may reject the cross-device invocation operation of the first application. In this case, the second application on the second electronic device is not launched.

In embodiments of this application, the first electronic device and the second electronic device in the distributed scenario may be electronic devices such as a mobile phone, a tablet computer, a wearable device, a smart screen device, a vehicle-mounted device, an augmented reality (augmented reality, AR)/virtual reality (virtual reality, VR) device, a notebook computer, a personal computer (personal computer, PC), a netbook, a personal digital assistant (personal digital assistant, PDA), or the like. A specific type of the first electronic device or the second electronic device is not limited in embodiments of this application.

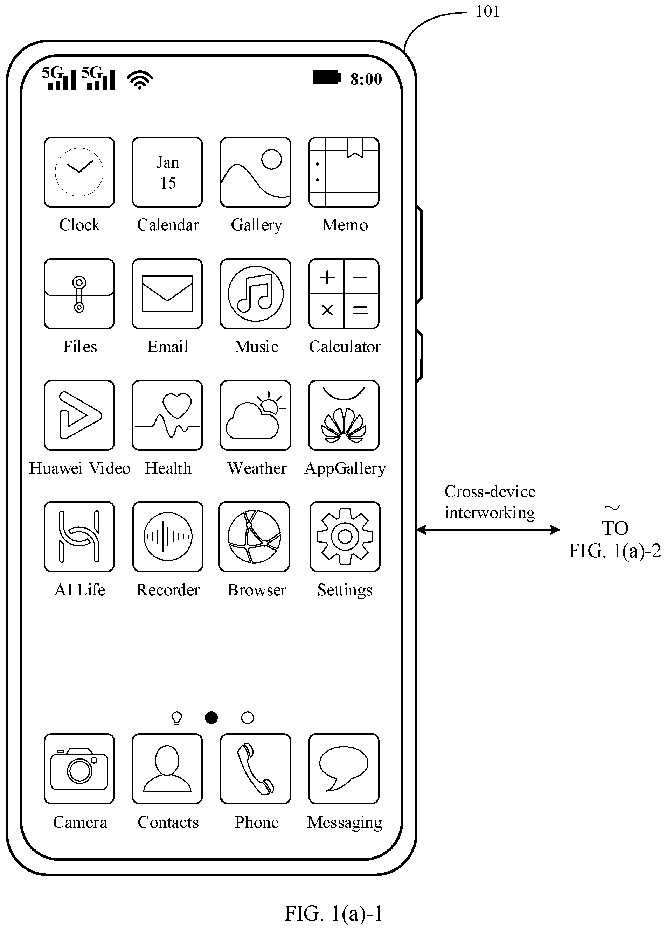

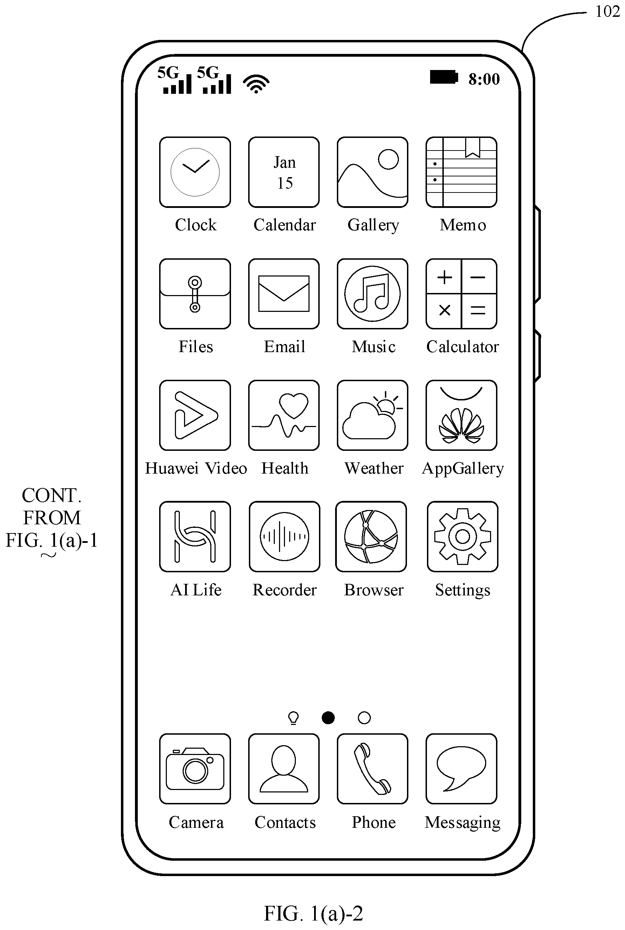

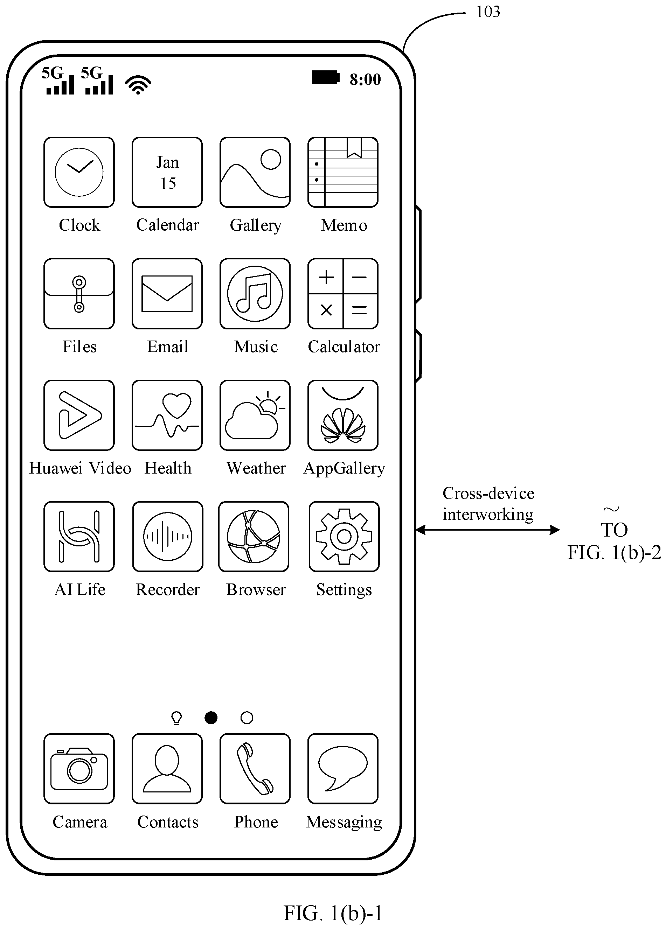

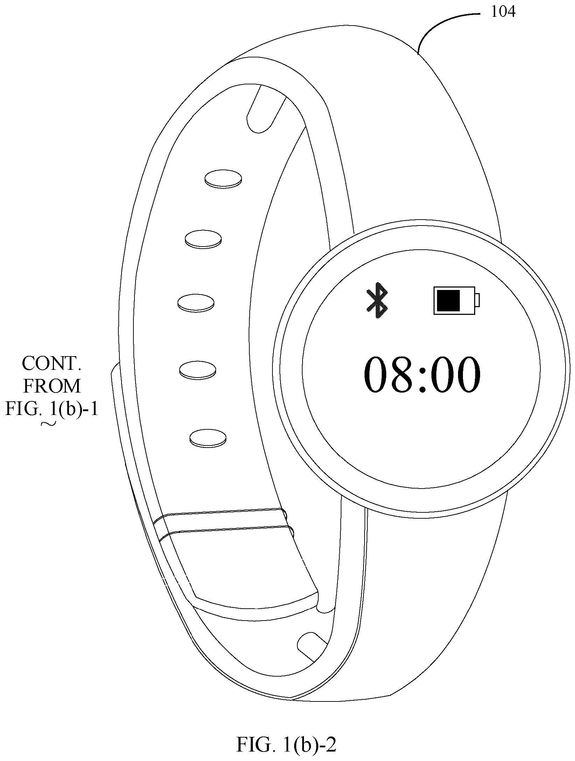

FIG. 1(a)-1 to FIG. 1(b)-2 are diagrams of application scenarios according to an embodiment of this application. In an example, the first electronic device and the second electronic device in the distributed scenario may be electronic devices of a same type. For example, as shown in FIG. 1(a)-1 and FIG. 1(a)-2, both a first electronic device 101 and a second electronic device 102 are mobile phones. The first electronic device 101 may identify an operation of the first application by using this method when the first application launches the second application on the second electronic device 102 in a cross-device manner. In another example, the first electronic device and the second electronic device in the distributed scenario may be electronic devices of different types. For example, as shown in FIG. 1(b)-1 and FIG. 1(b)-2, a first electronic device 103 may be a mobile phone, and a second electronic device 104 may be a wearable device such as a smartwatch.

In embodiments of this application, the first application on the first electronic device and the second application on the second electronic device may be applications of a same type, or may be applications of different types. For example, both the first application on the first electronic device and the second application on the second electronic device may be "Health" apps in FIG. 1(a)-1 and FIG. 1(a)-2; or the first application on the first electronic device may be a "Health" app installed on the first electronic device 101 in FIG. 1(a)-1, and the second application on the second electronic device may be a "Music" app installed on the second electronic device 102 in FIG. 1(a)-2.

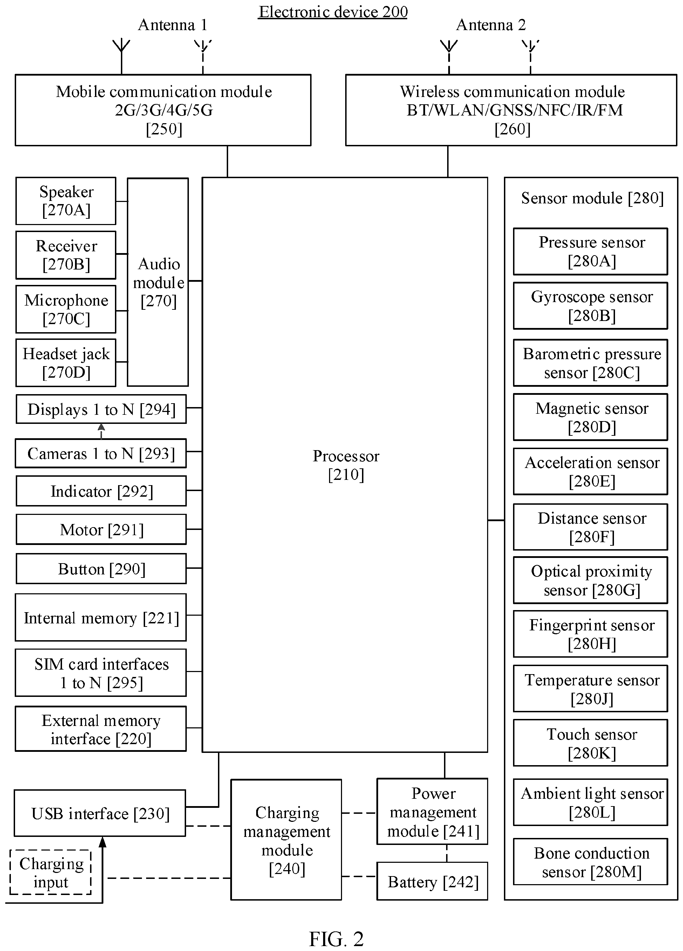

For example, FIG. 2 is a diagram of a structure of an electronic device 200. For structures of the first electronic device and the second electronic device, refer to the structure of the electronic device 200 in FIG. 2.

The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application does not constitute a specific limitation on the electronic device 200. In some embodiments of this application, the electronic device 200 may include more or fewer components than those shown in the figure, or some components may be combined, or some components may be split, or there may be a different component arrangement. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetch and instruction execution.

A memory may be further disposed in the processor 210, and is configured to store instructions and data. In some embodiments of this application, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In some embodiments of this application, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments of this application, the processor 210 may include a plurality of groups of I2C buses. The processor 210 may be separately coupled to the touch sensor 280K, a charger, a flash, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 200.

The I2S interface may be configured to perform audio communication. In some embodiments of this application, the processor 210 may include a plurality of groups of I2S buses. The processor 210 may be coupled to the audio module 270 through the I2S bus, to implement communication between the processor 210 and the audio module 270. In some embodiments of this application, the audio module 270 may transmit an audio signal to the wireless communication module 260 through the I2S interface, to implement a function of answering a call through a Bluetooth headset.

The PCM interface may also be configured to: perform audio communication, and sample, quantize, and code an analog signal. In some embodiments of this application, the audio module 270 may be coupled to the wireless communication module 260 through a PCM bus interface. In some embodiments of this application, the audio module 270 may alternatively transmit an audio signal to the wireless communication module 260 through the PCM interface, to implement a function of answering a call through a Bluetooth headset.

The UART interface is a universal serial data bus, and is configured to perform asynchronous communication. The bus may be a two-way communication bus. The bus converts to-be-transmitted data between serial communication and parallel communication. In some embodiments of this application, the UART interface is generally configured to connect the processor 210 and the wireless communication module 260. For example, the processor 210 communicates with a Bluetooth module in the wireless communication module 260 through the UART interface, to implement a Bluetooth function. In some embodiments of this application, the audio module 270 may transmit an audio signal to the wireless communication module 260 through the UART interface, to implement a function of playing music through a Bluetooth headset.

The MIPI interface may be configured to connect the processor 210 to a peripheral device such as the display 294 or the camera 293. The MIPI interface includes a camera serial interface (camera serial interface, CSI), a display serial interface (display serial interface, DSI), and the like.

In some embodiments of this application, the processor 210 communicates with the camera 293 through the CSI, to implement a photographing function of the electronic device 200. The processor 210 communicates with the display 294 through the DSI, to implement a display function of the electronic device 200.

The GPIO interface may be configured by software. The GPIO interface may be configured as a control signal or a data signal. In some embodiments of this application, the GPIO interface may be configured to connect the processor 210 to the camera 293, the display 294, the wireless communication module 260, the audio module 270, the sensor module 280, and the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to connect to a charger to charge the electronic device 200, or may be configured to transmit data between the electronic device 200 and a peripheral device. The USB interface 230 may alternatively be configured to connect to a headset, to play audio through the headset. The interface may be further configured to connect to another electronic device, for example, an AR device.

It may be understood that an interface connection relationship between the modules illustrated in embodiments of this application is merely an example for description, and does not constitute a limitation on the structure of the electronic device 200. In some other embodiments of this application, the electronic device 200 may alternatively use an interface connection manner different from that in the foregoing embodiment, or a combination of a plurality of interface connection manners.

The charging management module 240 is configured to receive a charging input from the charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input through a wireless charging coil of the electronic device 200. When charging the battery 242, the charging management module 240 may further supply power to the electronic device by using the power management module 241.

The power management module 241 is configured to connect to the battery 242, the charging management module 240, and the processor 210. The power management module 241 receives an input from the battery 242 and/or the charging management module 240, to supply power to the processor 210, the internal memory 221, the display 294, the camera 293, the wireless communication module 260, and the like. The power management module 241 may be further configured to monitor parameters such as a battery capacity, a quantity of battery cycles, and a battery health status (electric leakage and impedance).

In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that includes 2G/3G/4G/5G or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1.

In some embodiments of this application, at least some functional modules of the mobile communication module 250 may be disposed in the processor 210. In some embodiments of this application, at least some functional modules of the mobile communication module 250 may be disposed in a same device as at least some modules of the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 270A, the receiver 270B, or the like), or displays an image or a video through the display 294.

In some embodiments of this application, the modem processor may be an independent device. In some other embodiments, the modem processor may be independent of the processor 210, and is disposed in a same device as the mobile communication module 250 or another functional module.

The wireless communication module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 260 may be one or more devices integrating at least one communication processing module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments of this application, in the electronic device 200, the antenna 1 and the mobile communication module 250 are coupled, and the antenna 2 and the wireless communication module 260 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 implements a display function over the GPU, the display 294, the application processor, and the like. The GPU is a microprocessor for image processing, and is connected to the display 294 and the application processor. The GPU is configured to perform mathematical and geometric computation for graphic rendering. The processor 210 may include one or more GPUs that execute program instructions to generate or change displayed information.

The display 294 is configured to display an image, a video, or the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments of this application, the electronic device 200 may include one or N displays 294, where N is a positive integer greater than 1.

The electronic device 200 may implement a photographing function through the ISP, the camera 293, the video codec, the GPU, the display 294, the application processor, and the like.

The ISP is configured to process data fed back by the camera 293. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments of this application, the ISP may be disposed in the camera 293.

The camera 293 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments of this application, the electronic device 200 may include one or N cameras 293, where N is a positive integer greater than 1.

The digital signal processor is configured to process a digital signal, and may process another digital signal in addition to the digital image signal. For example, when the electronic device 200 selects a frequency, the digital signal processor is configured to perform Fourier transform and the like on frequency energy.

The video codec is configured to compress or decompress a digital video. The electronic device 200 may support one or more types of video codecs. In this way, the electronic device 200 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, a transfer mode between human brain neurons, and may further continuously perform self-learning. The NPU may be used to implement applications such as intelligent cognition of the electronic device 200, for example, image recognition, facial recognition, voice recognition, and text understanding.

The external memory interface 220 may be configured to connect to an external memory card, for example, a micro SD card, to extend a storage capability of the electronic device 200. The external memory card communicates with the processor 210 through the external memory interface 220, to implement a data storage function. For example, files such as music and videos are stored in the external memory card.

The internal memory 221 may be configured to store computer-executable program code. The executable program code includes instructions. The internal memory 221 may include a program storage area and a data storage area. The program storage area may store an operating system, an application required by at least one function (for example, a voice playing function or an image playing function), and the like. The data storage area may store data (for example, audio data or a phone book) created in a process of using the electronic device 200.

In addition, the internal memory 221 may include a high-speed random access memory, or may include a nonvolatile memory, for example, at least one magnetic disk storage device, a flash memory, or a universal flash storage (universal flash storage, UFS).

The processor 210 runs instructions stored in the internal memory 221 and/or instructions stored in the memory disposed in the processor, to perform various function applications of the electronic device 200 and data processing.

The electronic device 200 may implement an audio function, for example, music playing or recording, by using the audio module 270, the speaker 270A, the receiver 270B, the microphone 270C, the headset jack 270D, the application processor, and the like.

The audio module 270 is configured to convert digital audio information into an analog audio signal for output, and is also configured to convert an analog audio input into a digital audio signal. The audio module 270 may be further configured to encode and decode an audio signal. In some embodiments of this application, the audio module 270 may be disposed in the processor 210, or some functional modules of the audio module 270 may be disposed in the processor 210.

The speaker 270A, also referred to as a "horn", is configured to convert an audio electrical signal into a sound signal. The electronic device 200 may be used to listen to music or answer a call in a hands-free mode through the speaker 270A.

The receiver 270B, also referred to as an "earpiece", is configured to convert an audio electrical signal into a sound signal. When a call is answered or voice information is received through the electronic device 200, the receiver 270B may be put close to a human ear to listen to a voice.

The microphone 270C, also referred to as a "mike" or a "mic", is configured to convert a sound signal into an electrical signal. When making a call or sending voice information, a user may make a sound by moving a human mouth close to the microphone 270C to input a sound signal to the microphone 270C. At least one microphone 270C may be disposed in the electronic device 200. In some other embodiments, two microphones 270C may be disposed in the electronic device 200, to collect a sound signal and implement a noise reduction function. In some other embodiments, three, four, or more microphones 270C may alternatively be disposed in the electronic device 200, to collect a sound signal, implement noise reduction, identify a sound source, implement a directional recording function, and the like.

The headset jack 270D is configured to connect to a wired headset. The headset jack 270D may be the USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 280A is configured to sense a pressure signal, and can convert the pressure signal into an electrical signal. In some embodiments, the pressure sensor 280A may be disposed on the display 294. There are a plurality of types of pressure sensors 280A, such as a resistive pressure sensor, an inductive pressure sensor, and a capacitive pressure sensor. The capacitive pressure sensor may include at least two parallel plates made of conductive materials. When a force is applied to the pressure sensor 280A, capacitance between electrodes changes. The electronic device 200 determines pressure intensity based on the change of the capacitance. When a touch operation is performed on the display 294, the electronic device 200 detects intensity of the touch operation by using the pressure sensor 280A. The electronic device 200 may also calculate a touch location based on a detection signal of the pressure sensor 280A.

In some embodiments of this application, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 280B may be configured to determine a motion posture of the electronic device 200. In some embodiments of this application, an angular velocity of the electronic device 200 around three axes (namely, axes x, y, and z) may be determined through the gyroscope sensor 280B. The gyroscope sensor 280B may be configured to implement image stabilization during photographing. For example, when the shutter is pressed, the gyroscope sensor 280B detects an angle at which the electronic device 200 jitters, calculates, based on the angle, a distance for which a lens module needs to compensate, and allows the lens to cancel the jitter of the electronic device 200 through reverse motion, to implement image stabilization. The gyroscope sensor 280B may be further used in a navigation scenario and a motion-sensing game scenario.

The barometric pressure sensor 280C is configured to measure barometric pressure. In some embodiments of this application, the electronic device 200 calculates an altitude based on a barometric pressure value measured by the barometric pressure sensor 280C, to assist in positioning and navigation.

The magnetic sensor 280D includes a Hall sensor. The electronic device 200 may detect opening and closing of a flip cover or a leather case by using the magnetic sensor 280D. In some embodiments of this application, when the electronic device 200 is a flip device, the electronic device 200 may detect opening and closing of a flip cover by using the magnetic sensor 280D. Further, a feature such as automatic unlocking of the flip cover is set based on a detected opening or closing state of the leather case or a detected opening or closing state of the flip cover.

The acceleration sensor 280E may detect magnitudes of accelerations in various directions (usually on three axes) of the electronic device 200. A magnitude and a direction of gravity may be detected when the electronic device 200 is still. The acceleration sensor 280E may be further configured to identify a posture of the electronic device, and is used in an application such as switching between a landscape mode and a portrait mode or a pedometer.

The distance sensor 280F is configured to measure a distance. The electronic device 200 may measure a distance through infrared or laser. In some embodiments of this application, for example, in a photographing scene, the electronic device 200 may measure a distance by using the distance sensor 280F, to implement quick focusing.

The optical proximity sensor 280G may include, for example, a light-emitting diode (LED) and an optical detector, for example, a photodiode. The light-emitting diode may be an infrared light-emitting diode. The electronic device 200 emits infrared light outwards by using the light-emitting diode. The electronic device 200 detects infrared reflected light from a nearby object by using the photodiode. When sufficient reflected light is detected, it may be determined that there is an object near the electronic device 200. When insufficient reflected light is detected, the electronic device 200 may determine that there is no object near the electronic device 200. The electronic device 200 may detect, by using the optical proximity sensor 280G, that the user holds the electronic device 200 close to an ear for a call, to automatically turn off a screen to save power. The optical proximity sensor 280G may also be used in a leather case mode or a pocket mode to automatically perform screen unlocking or locking.

The ambient light sensor 280L is configured to sense ambient light brightness. The electronic device 200 may adaptively adjust brightness of the display 294 based on the sensed ambient light brightness. The ambient light sensor 280L may also be configured to automatically adjust white balance during photographing. The ambient light sensor 280L may further cooperate with the optical proximity sensor 280G to detect whether the electronic device 200 is in a pocket, to avoid an accidental touch.

The fingerprint sensor 280H is configured to collect a fingerprint. The electronic device 200 may implement fingerprint unlock, application access lock, fingerprint photographing, fingerprint-based call answering, and the like by using a feature of the collected fingerprint.

The temperature sensor 280J is configured to detect a temperature. In some embodiments of this application, the electronic device 200 executes a temperature processing policy by using the temperature detected by the temperature sensor 280J. For example, when the temperature reported by the temperature sensor 280J exceeds a threshold, the electronic device 200 lowers performance of a processor nearby the temperature sensor 280J, to reduce power consumption for thermal protection. In some other embodiments, when the temperature is lower than another threshold, the electronic device 200 heats the battery 242, to avoid abnormal shutdown of the electronic device 200 caused by a low temperature. In some still other embodiments, when the temperature is lower than still another threshold, the electronic device 200 boosts an output voltage of the battery 242, to avoid abnormal shutdown caused by the low temperature.

The touch sensor 280K is also referred to as a "touch device". The touch sensor 280K may be disposed on the display 294, and the touch sensor 280K and the display 294 constitute a touchscreen that is also referred to as a "touch screen". The touch sensor 280K is configured to detect a touch operation performed on or near the touch sensor. The touch sensor may transfer the detected touch operation to the application processor to determine a type of the touch event. A visual output related to the touch operation may be provided by using the display 294. In some other embodiments, the touch sensor 280K may alternatively be disposed on a surface of the electronic device 200 at a location different from that of the display 294.

The bone conduction sensor 280M may obtain a vibration signal. In some embodiments of this application, the bone conduction sensor 280M may obtain a vibration signal of a vibration bone of a human vocal-cord part. The bone conduction sensor 280M may also be in contact with a body pulse to receive a blood pressure beating signal.

In some embodiments of this application, the bone conduction sensor 280M may alternatively be disposed in a headset to be combined into a bone conduction headset. The audio module 270 may obtain a voice signal through parsing based on the vibration signal that is of the vibration bone of the vocal-cord part and that is obtained by the bone conduction sensor 280M, to implement a voice function. The application processor may parse heart rate information based on the blood pressure beating signal obtained by the bone conduction sensor 280M, to implement a heart rate detection function.

The button 290 includes a power button, a volume button, or the like. The button 290 may be a mechanical button or a touch button. The electronic device 200 may receive a button input, and generate a button signal input related to a user setting and function control of the electronic device 200.

The motor 291 may generate a vibration prompt. The motor 291 may be configured to provide an incoming call vibration prompt and a touch vibration feedback. For example, touch operations performed on different applications (for example, photographing and audio playing) may correspond to different vibration feedback effect. The motor 291 may also correspond to different vibration feedback effect for touch operations performed on different areas of the display 294. Different application scenarios (for example, a time reminder, information receiving, an alarm clock, and a game) may also correspond to different vibration feedback effect. Touch vibration feedback effect may be further customized.

The indicator 292 may be an indicator light, and may be configured to indicate a charging status and a power change, or may be configured to indicate a message, a missed call, a notification, and the like.

The SIM card interface 295 is configured to connect to a SIM card. The SIM card may be inserted into the SIM card interface 295, or removed from the SIM card interface 295, to implement contact with or separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or different types. The SIM card interface 295 is also compatible with different types of SIM cards. The SIM card interface 295 is also compatible with an external memory card. The electronic device 200 interacts with a network by using a SIM card, to implement functions such as conversation and data communication. In some embodiments of this application, the electronic device 200 uses an eSIM card. The eSIM card may be embedded in the electronic device 200, and cannot be separated from the electronic device 200.

A software system of the electronic device 200 may use a layered architecture, an event-driven architecture, a microkernel architecture, a micro service architecture, or a cloud architecture. In embodiments of this application, an operating system with a layered architecture is used as an example to describe the software structure of the electronic device 200. It should be understood that the operating system may be an operating system applicable to an electronic device such as a mobile phone, a tablet, or a television, for example, a HarmonyOS^{®} system, an Android^{®} system, or an iOS^{®} system. This is not limited in this application.

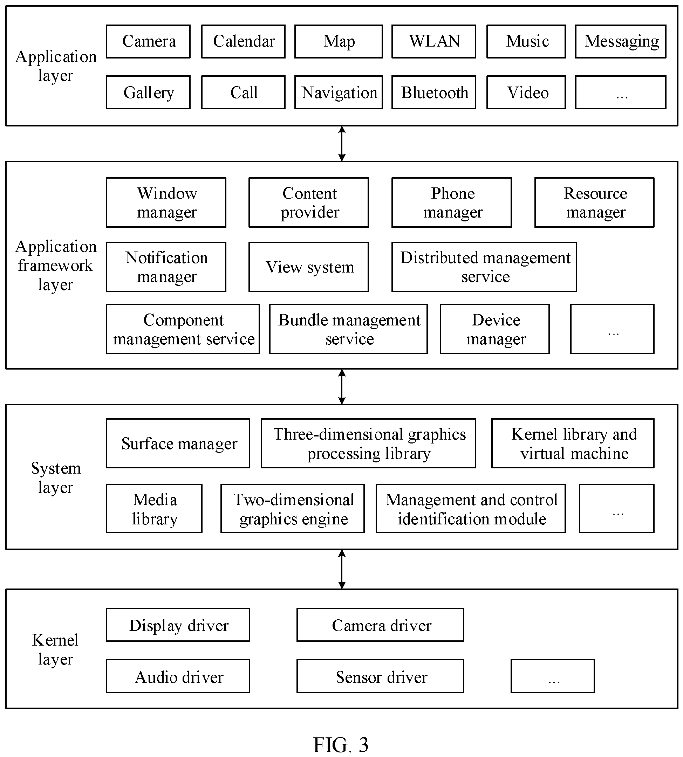

FIG. 3 is a block diagram of the software structure of the electronic device 200 according to an embodiment of this application.

In a layered architecture, software is divided into several layers, and each layer has a clear role and task. The layers communicate with each other through a software interface. In some embodiments of this application, an operating system is divided into four layers: an application layer, an application framework layer, a system layer, and a kernel layer from top to bottom.

The application layer may include a series of application packages.

As shown in FIG. 3, the application packages may include applications such as Camera, Gallery, Calendar, Call, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, a distributed management service (distributed management service, DMS), a component management service (component management service, CMS), a bundle management service (bundle management service, BMS), a device manager (device manager, DM), and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history, a bookmark, an address book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The phone manager is configured to provide a communication function of the electronic device 200, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message that may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an announcement is given, the electronic device vibrates, or the indicator light blinks.

The distributed management service may be implemented by using a distributed module, and responsible for handling operations related to cross-device invocation of an application, such as cross-device launch, binding, migration, and calling.

The component management service may be used to manage all components of an operating system of the electronic device 200.

The bundle management service may be used to manage all application package information on the electronic device 200.

The device manager may be configured to manage statuses of all devices in the network, for example, device statuses of the first electronic device and the second electronic device that are successfully networked.

A kernel library and a virtual machine at the system layer are responsible for scheduling and managing the operating system.

The kernel library includes two parts: a function that needs to be called in a Java language, and a kernel library of the operating system.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system layer may further include a plurality of functional modules, for example, a management and control identification module, a surface manager (surface manager), a media library (Media Libraries), a three-dimensional graphics processing library (for example, OpenGL ES), and a 2D graphics engine (for example, SGL).

When an application performs a cross-device invocation operation, the management and control identification module may receive invocation information sent by the distributed module, and obtain corresponding information by querying the CMS, the BMS, the DM, or the like, to determine whether the application is allowed to perform the cross-device invocation operation. For example, after the first electronic device 103 and the second electronic device 104 in FIG. 1(b)-1 and FIG. 1(b)-2 are successfully networked, the first application on the first electronic device 103 attempts to launch the second application on the second electronic device 104 in a cross-device manner. The distributed management module may send information about this invocation to the management and control identification module. The management and control identification module may identify and control the cross-device invocation of the first application based on information obtained by querying the CMS, the BMS, the DM, or the like.

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In the following embodiments, an electronic device having the hardware structure shown in FIG. 2 and/or the software structure shown in FIG. 3 is used as an example to describe an application control method provided in embodiments of this application with reference to the accompanying drawings and application scenarios.

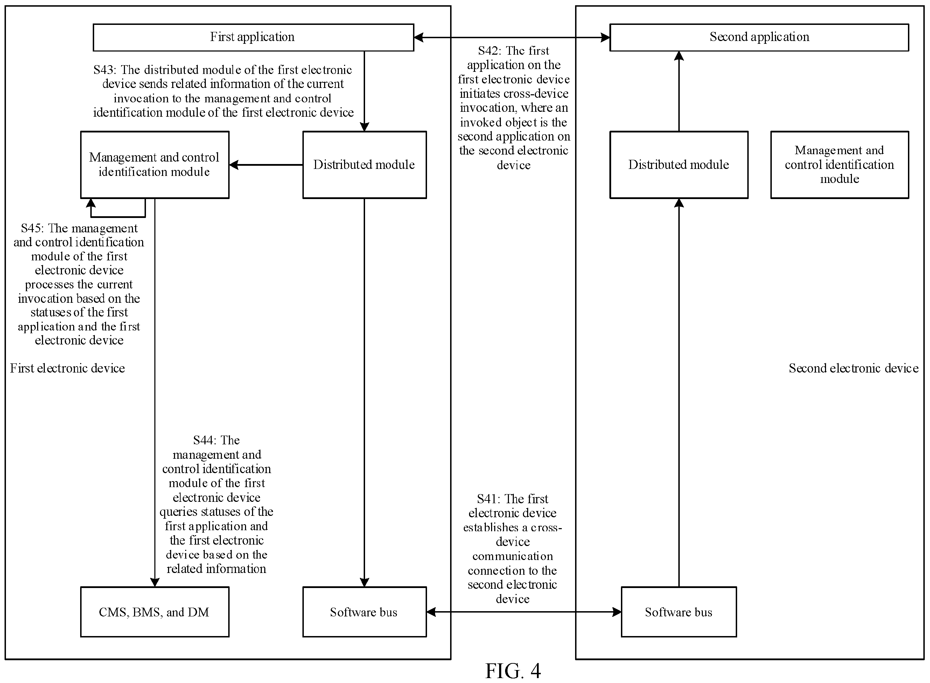

FIG. 4 is a diagram of an application control method according to an embodiment of this application. The method shown in FIG. 4 is a process of managing and controlling, by obtaining related information of a cross-device invocation initiating end, an application initiating cross-device invocation. The method may specifically include the following steps.

S41: A first electronic device establishes a cross-device communication connection to a second electronic device.

The cross-device communication connection needs to be established between the first electronic device and the second electronic device in FIG. 4, to implement cross-device interworking between the first electronic device and the second electronic device. In an example, the communication connection may be a direct connection between the first electronic device and the second electronic device. For example, the first electronic device and the second electronic device may be directly connected through Bluetooth or in another manner. In another example, the communication connection may alternatively be an indirect connection between the first electronic device and the second electronic device. For example, the first electronic device and the second electronic device may be indirectly connected by accessing a same network or in another manner. A specific manner of establishing the cross-device communication connection between the first electronic device and the second electronic device is not limited in this embodiment of this application.

In this embodiment of this application, that a first electronic device establishes a cross-device communication connection to a second electronic device may be implemented through a software bus. In an example, a software bus of an operating system mainly includes the following functions: discovery, connection, networking/topology management, a task bus, and a data bus. The "discovery" means to search whether there is a related device around; the "connection" means to establish a connection with a discovered device; and the "networking/topology management" means to perform network topology management on all discovered devices, for example, to form a star network topology or form a mesh network topology. The "task bus" is a path used to transmit information of a small data amount based on the established network topology. The "data bus" is a path used to transmit information of a large data amount.

S42: A first application on the first electronic device initiates cross-device invocation, where an invoked object is a second application on the second electronic device.

As shown in FIG. 4, the first application may be an application installed on the first electronic device, and the second application may be an application installed on the second electronic device. On the basis of cross-device interworking between the first electronic device and the second electronic device, the first application on the first electronic device may initiate cross-device invocation to each application on the second electronic device. For example, the invoked object may be the second application on the second electronic device.

In an example, a purpose of the cross-device invocation initiated by the first application may include launching the second application on the second electronic device. In another example, if the second application is not installed on the second electronic device, a purpose of the cross-device invocation initiated by the first application may further include installing the second application on the second electronic device.

The cross-device invocation initiated by the first application on the first electronic device may be detected by a distributed module of the first electronic device.

S43: The distributed module of the first electronic device sends related information of the current invocation to a management and control identification module of the first electronic device.

After detecting the cross-device invocation initiated by the first application, the distributed module of the first electronic device may send the related information of the current invocation to the local management and control identification module. The related information may include one or more of a package name of an application at the initiating end, a component name of the application at the initiating end, a device ID at the initiating end, a package name of an application at an invoked end, a component name of the application at the invoked end, a device ID at the invoked end, a flag at the invoked end, and the like. The related information may include a package name of the first application on the first electronic device, a component name of the first application, a device ID of the first electronic device, a package name of the second application on the second electronic device, a component name of the second application, a device ID of the second electronic device, a flag of the second electronic device, and the like.

S44: The management and control identification module of the first electronic device queries statuses of the first application and the first electronic device based on the related information.

The statuses queried by the management and control identification module of the first electronic device based on the related information may include a plurality of statuses, and the plurality of statuses may be statuses of the first application and/or the first electronic device.

In an example, the statuses queried by the management and control identification module of the first electronic device may include the following several types:
a. whether the application at the initiating end is currently in a foreground;
b. whether identification information of the application at the initiating end is the same as that of the application at the invoked end;
c. whether the device at the initiating end and the device at the invoked end are networked under a same account; and
d. whether the application at the initiating end and the application at the invoked end access corresponding electronic devices through specific interfaces.

It should be understood that the foregoing four statuses are merely examples of the statuses queried by the management and control identification module. The statuses queried by the management and control identification module based on the related query information may be some of the foregoing four statuses, and the management and control identification module may alternatively query more statuses than the foregoing four statuses.

Whether the application at the initiating end is currently in a foreground may mean whether the first application in FIG. 4 is currently in a foreground of the first electronic device. In a possible implementation, the management and control identification module of the first electronic device may query a CMS based on the package name and the component name of the first application in the received related information to obtain an application process, and determine a life cycle status of the first application based on the application process, to obtain information about whether the first application is currently in the foreground.

The identification information of the application at the initiating end and the identification information of the application at the invoked end may be signatures of installation packages of the first application and the second application in FIG. 4. Generally, a signature of an installation package of an application may be used as a unique identifier of the application. Whether the first application at the initiating end and the second application at the invoked end are a same application may be determined based on the information that is obtained through query and that is about whether the signatures of the installation packages of the first application and the second application are the same.

Whether the device at the initiating end and the device at the invoked end are networked under a same account may mean whether a user account with which the first electronic device in FIG. 4 is currently logged in is the same as a user account with which the second electronic device in FIG. 4 is currently logged in. If the user account with which the first electronic device is currently logged in is the same as the user account with which the second electronic device is currently logged in, it may be considered that the first electronic device and the second electronic device are networked under a same account. If the user account with which the first electronic device is currently logged in is different from the user account with which the second electronic device is currently logged in, it should be considered that the first electronic device and the second electronic device are networked under different accounts.

The specific interface may be a specific security entry, for example, an entry provided by a device control center in a multi-device networking scenario of the operating system. By querying whether the application at the initiating end and the application at the invoked end access the corresponding electronic devices through the specific interfaces, it may be learned whether installation processes of the first application and the second application are performed through installation entries specified by operating systems of the corresponding electronic devices. Generally, security and reliability of an application installed through a specified installation entry are high. On the contrary, security and reliability of the application are low, and installation of an application having low security and reliability brings a high risk to an electronic device. For example, an application that is invoked in a cross-device manner may be run for a long time, resulting in an increase of power consumption of an electronic device on which the application is installed, and a reduction of available duration or standby duration of the electronic device. In addition, the application may further collect some data of using the electronic device by the user, which also brings greater privacy and security problems.

In this embodiment of this application, the management and control identification module of the first electronic device may obtain the foregoing several types of status information by querying modules such as the CMS, a BMS, and a DM.

S45: The management and control identification module of the first electronic device processes the current invocation based on the statuses of the first application and the first electronic device.

In this embodiment of this application, the management and control identification module of the first electronic device may process, based on the queried statuses, a cross-device invocation behavior initiated by the first application. The cross-device invocation behavior initiated by the first application may be an invocation behavior of the first application to the second application on the second electronic device, and the statuses queried by the management and control identification module of the first electronic device may include the status of the first application and the status of the first electronic device. A processing result may include allowing the first application to invoke the second application in a cross-device manner, or not allowing the first application to invoke the second application in a cross-device manner.

In a possible implementation, the management and control identification module of the first electronic device may form several rule sets based on statuses that can be queried. After querying these statuses, the management and control identification module compares the queried statuses with the rule sets, to determine whether the first application is allowed to invoke the second application in a cross-device manner. For example, the rule set may indicate that a system is allowed to initiate a distributed transfer service only in a background, a plurality of electronic devices are not allowed to launch another application having a different signature when the plurality of electronic devices are networked under different accounts.

In an example, the statuses that can be queried by the management and control identification module include the four types in the foregoing example: a, b, c, and d. If a0 indicates that the application at the initiating end is currently in the background, a₁ indicates that the application at the initiating end is currently in the foreground, b₀ indicates that the identification information of the application at the initiating end is different from that of the application at the invoked end, b₁ indicates that the identification information of the application at the initiating end is the same as that of the application at the invoked end, c₀ indicates that the device at the initiating end and the device at the invoked end are networked under different accounts, c₁ indicates that the device at the initiating end and the device at the invoked end are networked under a same account, d₀ indicates that the application at the initiating end and the application at the invoked end do not access corresponding electronic devices through specific interfaces, and d₁ indicates that the application at the initiating end and the application at the invoked end access corresponding electronic devices through specific interfaces, several rule sets may be formed, for example,
rule set 0: {a₀, b₀, c₀, d₀};
rule set 1: {a₀, b₀, c₀, d₁};
rule set 2: {a₀, b₀, c₁, d₁};
   ...
rule set N: {a₁, b₁, c₁, d₁}.

The rule set 0 indicates that the first application at the initiating end is currently run in the background of the first electronic device, an application identifier of the first application is different from that of the second application at the invoked end, the first electronic device serving as the initiating end and the second electronic device serving as the invoked end are networked under different accounts, and the first application and the second application do not access the corresponding electronic devices through the specific interfaces; ...; and the rule set N indicates that the first application at the initiating end is currently run in the foreground of the first electronic device, an application identifier of the first application is the same as that of the second application at the invoked end, the first electronic device serving as the initiating end and the second electronic device serving as the invoked end are networked under a same account, and the first application and the second application access the corresponding electronic devices through the specific interfaces.

For different rule sets, the management and control identification module may configure corresponding processing results for the rule sets. For example, for the rule set 0, a processing result corresponding to the rule set 0 may be that the first application at the initiating end is not allowed to invoke the second application in a cross-device manner. For the rule set N, a processing result corresponding to the rule set N may be that the first application at the initiating end is allowed to invoke the second application in a cross-device manner. To be specific,
rule set 0: {a₀, b₀, c₀, d₀}, indicating that the first application at the initiating end is not allowed to invoke the second application in a cross-device manner;
rule set 1: {a₀, b₀, c₀, d₁}, indicating that the first application at the initiating end is not allowed to invoke the second application in a cross-device manner;
rule set 2: {a₀, b₀, c₁, d₁}, indicating that the first application at the initiating end is not allowed to invoke the second application in a cross-device manner;
... rule set N: {a₁, b₁, c₁, d₁}, indicating that the first application at the initiating end is allowed to invoke the second application in a cross-device manner.

After querying the statuses of the first application and the first electronic device, the management and control identification module of the first electronic device may determine a corresponding rule set based on the status information, to process, based on the processing result corresponding to the determined rule set, the cross-device invocation behavior currently initiated by the first application.

In another possible implementation of this embodiment of this application, a rule set may be further formed with reference to a security level of an electronic device, to process the cross-device invocation behavior of the first application with reference to the security level of the electronic device and the rule set.

In some examples, the security level of the electronic device may be determined based on a hardware configuration of the electronic device. For example, the hardware configuration of the electronic device may include: whether the electronic device has a screen, a memory size of the electronic device, whether the electronic device has a security chip, and the like. The memory size of the electronic device may be classified into a plurality of levels. For example, the memory size is between 0 MB and 100 MB, the memory size is between 100 MB and 2 GB, or the memory size is greater than 2 GB.

A memory of an electronic device such as a mobile phone, a PC, a tablet computer, an in-vehicle infotainment system, or a smart screen device is generally greater than 2 GB. A memory of an electronic device such as a smartwatch, a smart speaker, or smart glasses is between 100 MB and 2 GB. A memory of an electronic device such as a smart headset is between 0 MB and 100 MB. In addition, an electronic device having a security chip also has relatively higher security. It may be learned that an electronic device having a larger memory and having a security chip has a relatively high security level; and on the contrary, an electronic device having a smaller memory and having no security chip has a relatively low security level.

The management and control identification module of the first electronic device may determine the security level of the electronic device based on the hardware configuration of the electronic device. In an example, the security level of the electronic device may include three security levels: a high level, a medium level, and a low level. The three security levels may be represented by S₁, S₂, and S₃ respectively. S₁ represents that the security level of the electronic device is a low level. In other words, security of the electronic device is low. S₂ represents that the security level of the electronic device is a medium level. In other words, security of the electronic device is at a medium level. S₃ represents that the security level of the electronic device is a high level. In other words, security of the electronic device is high. With reference to the foregoing security levels, the rule sets in the foregoing example may be represented as:
rule set 0-1: {a₀, b₀, c₀, d₀, S₁};
rule set 0-2: {a₀, b₀, c₀, d₀, S₂};
rule set 0-3: {a₀, b₀, c₀, d₀, S₃};
rule set 1-1: {a₀, b₀, c₀, d₁, S₁};
rule set 1-2: {a₀, b₀, c₀, d₁, S₂};
rule set 1-3: {a₀, b₀, c₀, d₁, S₃};
rule set 2-1: {a₀, b₀, c₁, d₁, S₁};
rule set 2-2: {a₀, b₀, c₁, d₁, S₂};
rule set 2-3: {a₀, b₀, c₁, d₁, S₃};
   ...
rule set N-1: {a₁, b₁, c₁, d₁, S₁};
rule set N-2: {a₁, b₁, c₁, d₁, S₂}; and
rule set N-3: {a₁, b₁, c₁, d₁, S3}.

A corresponding processing result may also be preconfigured for each rule set. For example, for the rule set N-1, a processing result corresponding to the rule set N-1 may be that the first application at the initiating end is not allowed to invoke the second application in a cross-device manner. For the rule set N-2 and the rule set N-3, processing results corresponding to the rule set N-2 and the rule set N-3 may be that the first application at the initiating end is allowed to invoke the second application in a cross-device manner. Therefore, the foregoing rule sets may be further represented as:
rule set 0-1: {a₀, b₀, c₀, d₀, S₁}, indicating that the first application at the initiating end is not allowed to invoke the second application in a cross-device manner;
rule set 0-2: {a₀, b₀, c₀, d₀, S₂}, indicating that the first application at the initiating end is not allowed to invoke the second application in a cross-device manner;
rule set 0-3: {a₀, b₀, c₀, d₀, S₃}, indicating that the first application at the initiating end is not allowed to invoke the second application in a cross-device manner;
rule set 1-1: {a₀, b₀, c₀, d₁, S₁}, indicating that the first application at the initiating end is not allowed to invoke the second application in a cross-device manner;
rule set 1-2: {a₀, b₀, c₀, d₁, S₂}, indicating that the first application at the initiating end is not allowed to invoke the second application in a cross-device manner;
rule set 1-3: {a₀, b₀, c₀, d₁, S₃}, indicating that the first application at the initiating end is not allowed to invoke the second application in a cross-device manner;
rule set 2-1: {a₀, b₀, c₁, d₁, S₁}, indicating that the first application at the initiating end is not allowed to invoke the second application in a cross-device manner;
rule set 2-2: {a₀, b₀, c₁, d₁, S₂}, indicating that the first application at the initiating end is not allowed to invoke the second application in a cross-device manner;
rule set 2-3: {a₀, b₀, c₁, d₁, S₃}, indicating that the first application at the initiating end is allowed to invoke the second application in a cross-device manner;
   ...
rule set N-1: {a₁, b₁, c₁, d₁, S₁}, indicating that the first application at the initiating end is not allowed to invoke the second application in a cross-device manner;
rule set N-2: {a₁, b₁, c₁, d₁, S₂}, indicating that the first application at the initiating end is allowed to invoke the second application in a cross-device manner; and
rule set N-3: {a₁, b₁, c₁, d₁, S₃}, indicating that the first application at the initiating end is allowed to invoke the second application in a cross-device manner.

In an example, after the first electronic device and the second electronic device in FIG. 4 establish the cross-device interworking, the first application on the first electronic device attempts to launch the second application on the second electronic device in a cross-device manner. In this case, the distributed module of the first electronic device may detect the foregoing behavior of the first application. The distributed module may send, to the local management and control identification module, related information about the first application invoking the second application. The management and control identification module may query the status information of the first application and the first electronic device based on the received information, and compare the queried statuses with the pre-formed rule sets.

For example, the statuses queried by the management and control identification module include: The first application at the initiating end is currently run in the background of the first electronic device, the application identifier of the first application is different from that of the second application at the invoked end, the first electronic device serving as the initiating end and the second electronic device serving as the invoked end are networked under a same account, and the first application and the second application access the corresponding electronic devices through the specific interfaces. In addition, a security level of the first electronic device is a high level. With reference to the foregoing information, the hit rule set 2-3: {a₀, b₀, c₁, d₁, S₃} may be matched. Because the processing result corresponding to the rule set 2-3 is that the first application at the initiating end is allowed to invoke the second application in a cross-device manner, the management and control identification module may allow the local first application to invoke the second application on the second electronic device in a cross-device manner.

According to the application control method provided in this embodiment of this application, when the application initiates cross-device invocation, the electronic device may form the rule set by using the statuses that are of the application and the electronic device and that are obtained through query, and process the current invocation based on the processing result corresponding to the rule set. In this way, a possibility that some applications abnormally invoke another application in a cross-device manner can be reduced, and security of the electronic device and a running process of the application can be improved.

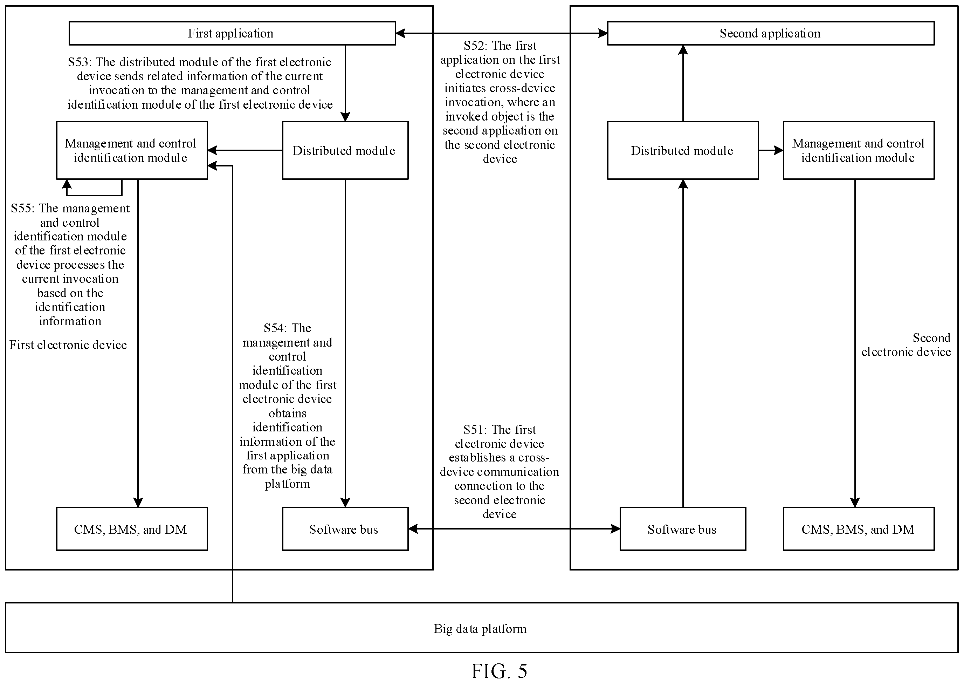

FIG. 5 is a diagram of another application control method according to an embodiment of this application. The method shown in FIG. 5 is a process in which identification information of a big data platform is obtained to manage and control an application initiating cross-device invocation. The method may specifically include the following steps.

S51: A first electronic device establishes a cross-device communication connection to a second electronic device.

S52: A first application on the first electronic device initiates cross-device invocation, where an invoked object is a second application on the second electronic device.

S53: A distributed module of the first electronic device sends related information of the current invocation to a management and control identification module of the first electronic device.

Because S51 to S53 are similar to S41 to S43 in the foregoing embodiment, reference may be made to each other. Details are not described herein again.

S54: The management and control identification module of the first electronic device obtains identification information of the first application from the big data platform.

In this embodiment of this application, the management and control identification module may obtain the identification information for the first application from the big data platform. In an example, the big data platform may be a platform that can collect running information of various applications and perform targeted analysis and processing. In another example, the big data platform may alternatively be an application distribution platform or a system management platform. The application distribution platform may be, for example, an application market, and the system management platform may be, for example, a mobile phone manager.

In a possible implementation, the identification information of the first application obtained by the management and control identification module from the big data platform may be obtained by the big data platform through comprehensive analysis based on running information that is related to the first application and that is reported by management and control identification modules of a plurality of electronic devices. The identification information may be used to identify whether the first application is an abnormal application.

In an example, the running information that is related to the first application and that is reported by the management and control identification modules may include the following types:
1. The first application attempts to launch the second application on a remote device immediately after the remote device goes online.
2. The first application attempts to launch the second application in a cross-device manner immediately after the first application is launched.
3. The first application attempts to launch the second application in a cross-device manner when the first application is run in a background.
4. The first application has a behavior of periodically and repeatedly launching the second application.
5. The second application is not run in a foreground after being launched in a cross-device manner.
6. The second application is cleared by a user immediately after being launched in a cross-device manner.

That the first application attempts to launch the second application on the remote device immediately after the remote device goes online may mean that in at least two electronic devices that are successfully networked, for example, an electronic device a and an electronic device b that are successfully networked, the first application on the electronic device a attempts to launch the second application on the electronic device b in a cross-device manner immediately after detecting that the electronic device b goes online.

That the first application attempts to launch the second application in a cross-device manner immediately after the first application is launched may mean that in an electronic device a and an electronic device b that are successfully networked, the first application on the electronic device a attempts to launch the second application on the electronic device b in a cross-device manner immediately after the first application in the electronic device a is launched.

That the first application attempts to launch the second application in a cross-device manner when the first application is run in a background may mean that in an electronic device a and an electronic device b that are successfully networked, when the first application is run in the background of the electronic device a, the first application still attempts to launch the second application on the electronic device b in a cross-device manner.

That the first application has a behavior of periodically and repeatedly launching the second application may mean that after an electronic device a and an electronic device b are successfully networked, the first application on the electronic device a periodically and repeatedly launches the second application on the electronic device b in a cross-device manner.

That the second application is not run in a foreground after being launched in a cross-device manner may mean that after an electronic device a and an electronic device b are successfully networked, the second application is not run in the foreground of the electronic device b after the first application on the electronic device a launches the second application on the electronic device b in a cross-device manner.

That the second application is cleared by a user immediately after being launched in a cross-device manner may mean that after an electronic device a and an electronic device b are successfully networked, the second application is cleared by the user of the electronic device b immediately after the first application on the electronic device a launches the second application on the electronic device b in a cross-device manner.

The big data platform may identify the first application based on a type and a quantity of the received running information related to the first application, to form the identification information. For example, if the big data platform receives the running information reported by a large quantity of electronic devices, it may be considered that the first application repeatedly invokes the second application in a cross-device manner, and the cross-device invocation behavior of the first application is not allowed by the user. Therefore, the big data platform may identify the first application as an abnormal application. If the big data platform receives the running information reported by only individual electronic devices, it may be considered that the first application does not maliciously invoke the second application, and the invocation behavior may be caused by a situation of the individual electronic devices. Therefore, the big data platform may identify the first application as a non-abnormal application. In an example, after identifying the first application, the big data platform may further process the first application in a manual review manner, to ensure accuracy of an identification result.

When the first application is identified as an abnormal application, the big data platform may notify an application distribution platform such as an application market to perform off-shelf processing on the first application, to prevent more electronic devices from installing the first application through the application distribution platform. In addition, for each electronic device on which the first application is installed, when the first application initiates the cross-device invocation, a management and control identification module of the electronic device (for example, the management and control identification module of the first electronic device in FIG. 5) may obtain the identification information of the first application from the big data platform.

S55: The management and control identification module of the first electronic device processes the current invocation based on the identification information.

The identification information obtained by the management and control identification module of the first electronic device from the big data platform may be information indicating that the first application is an abnormal application, or may be information indicating that the first application is a non-abnormal application. After the management and control identification module receives the identification information that is fed back by the big data and that indicates that the first application is an abnormal application, the management and control identification module may reject the cross-device invocation of the first application to the second application on the second electronic device, and terminate the cross-device invocation behavior of the local first application. After the management and control identification module receives the identification information that is fed back by the big data and that indicates that the first application is a non-abnormal application, the management and control identification module may allow the first application to invoke the second application on the second electronic device in a cross-device manner. In this case, the first application may continue to perform the behavior of invoking the second application in a cross-device manner.

In an example, when the first application on the first electronic device in FIG. 5 invokes the second application on the second electronic device in a cross-device manner, the identification information of the first application obtained by the management and control identification module of the first electronic device from the big data platform is a non-abnormal application, and the management and control identification module allows the first application to continue to perform the behavior of invoking the second application in a cross-device manner. Then, if the second application is not run in the foreground of the second electronic device after being launched in a cross-device manner, or the second application is immediately cleared by the user of the second electronic device, the management and control identification module of the first electronic device and/or the second electronic device may report the foregoing event as running information related to the first application to the big data platform.

In this embodiment of this application, the electronic device may process, based on an identification result provided by the big data platform, a behavior of invoking an application on another electronic device in a cross-device manner by a local application. The big data platform can aggregate running information of an application on a large quantity of electronic devices, and process a cross-device invocation behavior of the application based on an identification result of the big data platform, so that processing accuracy can be improved.

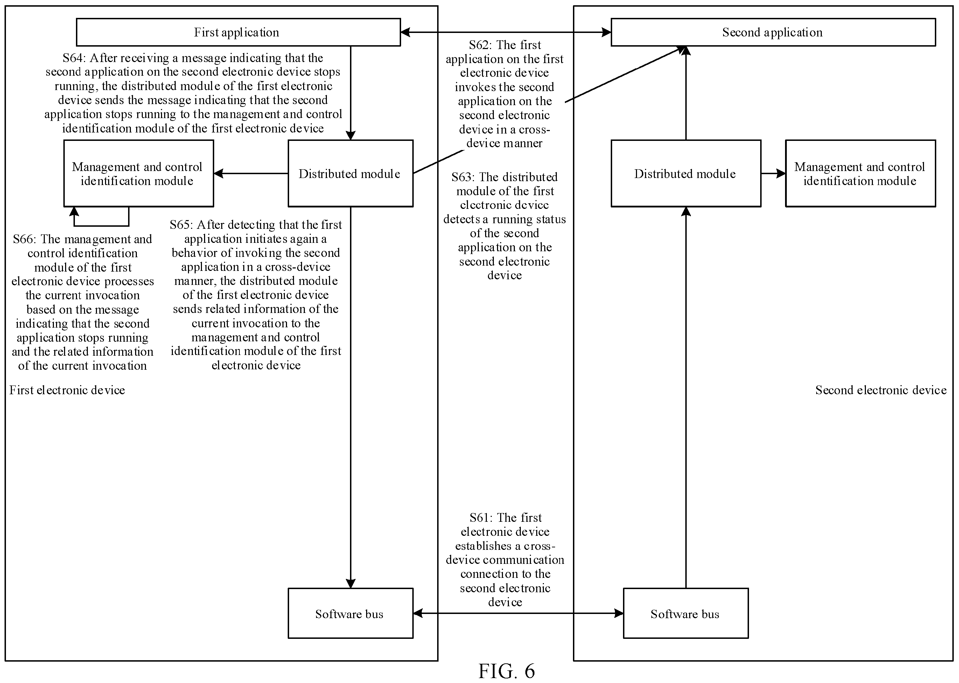

FIG. 6 is a diagram of still another application control method according to an embodiment of this application. The method shown in FIG. 6 is a process of managing and controlling, by identifying an abnormal keep-alive application, an application initiating cross-device invocation. The method may specifically include the following steps.

S61: A first electronic device establishes a cross-device communication connection to a second electronic device.

Because S61 is similar to S41 and S51 in the foregoing embodiments, reference may be made to each other. Details are not described herein again.

S62: A first application on the first electronic device invokes a second application on the second electronic device in a cross-device manner.

In this embodiment of this application, after the cross-device interworking is implemented between the first electronic device and the second electronic device, the first application on the first electronic device may launch the second application on the second electronic device in cross-device invocation manner.

S63: A distributed module of the first electronic device detects a running status of the second application on the second electronic device.

Keep-alive may mean that an application keeps in a running status. Generally, abnormal keepalive between applications may mean that after cross-device interworking is implemented between the applications, one application attempts to launch the peer application in a cross-device manner immediately after receiving a message indicating that the peer application is dead (stops running). For example, an application a and an application b are used as an example. Abnormal keepalive between the two may mean that after cross-device interworking is implemented between an electronic device on which the application a is installed and an electronic device on which the application b is installed, the application a detects a running status of the application b; and when the application a receives a notification indicating that the application b is dead, the application a immediately attempts to launch the application b in a cross-device manner. In addition, the application b also detects a running status of the application a; and when the application b receives a notification indicating that the application a is dead, the application b also immediately attempts to launch the application a in a cross-device manner.

An electronic device may sense a life cycle change of an application. For example, the first electronic device may sense a life cycle change of locally installed applications, including the first application, for example, launching, running, or stopping running of the applications. In a cross-device scenario, electronic devices that communicate with each other may also sense a life cycle change of each application installed on the peer device. For example, the first electronic device may sense a life cycle change of the second application on the second electronic device. When the second application is launched on the second electronic device, the first electronic device may receive a message indicating that the second application is launched; or when the second application stops running on the second electronic device, the first electronic device may receive a message indicating that the second application stops running.

In a possible implementation, the first electronic device in the cross-device scenario may sense a life cycle change of a peer application by using the distributed module. For example, the distributed module on the first electronic device may sense the life cycle change of the second application on the second electronic device.

Therefore, after the first application launches the second application in a cross-device manner, to identify whether the first application and the second application are applications that are mutually kept alive abnormally, the distributed module of the first electronic device may detect the running status of the launched second application, to determine whether the second application is continuously run on the second electronic device.

S64: After receiving the message indicating that the second application on the second electronic device stops running, the distributed module of the first electronic device sends the message indicating that the second application stops running to a management and control identification module of the first electronic device.

In this embodiment of this application, after the second application stops running on the second electronic device, the distributed module of the first electronic device may receive the message indicating that the second application stops running. In this case, the distributed module may send the received message to the local management and control identification module.

S65: After detecting that the first application initiates again a behavior of invoking the second application in a cross-device manner, the distributed module of the first electronic device sends related information of the current invocation to the management and control identification module of the first electronic device.

The distributed module of the first electronic device may continuously detect a running behavior of the local first application. When detecting that the first application initiates again the behavior of invoking the second application in a cross-device manner, the distributed module may send the related information of the current invocation to the local management and control identification module, and the management and control identification module identifies and processes the current invocation, to determine whether the first application is allowed to invoke the second application in a cross-device manner again.

For that the distributed module of the first electronic device sends the related information of the current invocation to the local management and control identification module, refer to the description of S43 in the foregoing embodiment. Details are not described herein again.

S66: The management and control identification module of the first electronic device processes the current invocation based on the message indicating that the second application stops running and the related information of the current invocation.

Generally, after the peer application is dead, the application that is mutually kept alive abnormally with the peer application immediately attempts to launch the peer application again in a cross-device manner. However, not all applications that attempt to launch the peer application again in a cross-device manner immediately after the peer application is dead are applications that are mutually kept alive abnormally. Therefore, the management and control identification module of the first electronic device needs to process the current invocation based on the received message indicating that the second application stops running and the related information of the current invocation.

In this embodiment of this application, when the management and control identification module determines, based on the received message indicating that the second application stops running and the related information of current invocation, that the first application and the second application are applications that are mutually kept alive abnormally, the management and control identification module may reject the behavior of launching the second application again in a cross-device manner by the first application.

In an example, the management and control identification module of the first electronic device may determine, based on a quantity of times of receiving the message that is sent by the distributed module and that indicates that the second application stops running, and a response status of the first application each time the second application stops running, whether the first application and the second application are applications that are mutually kept alive abnormally. For example, when the management and control identification module of the first electronic device receives, for a plurality of times, the message indicating that the second application stops running, and each time the second application stops running, the local first application immediately attempts to launch the second application again in a cross-device manner. In this case, the management and control identification module may identify the first application and the second application as applications that are mutually kept alive abnormally. When the management and control identification module receives, for a plurality of times, the message indicating that the second application stops running, but each time the second application stops running, the local first application does not immediately attempt to launch the second application again in a cross-device manner, or there are only a few cases in which the local first application immediately attempts to launch the second application again in a cross-device manner. In this case, the management and control identification module may not identify the first application and the second application as applications that are mutually kept alive abnormally.

It should be understood that, when a quantity of times the first application on the first electronic device launches the second application on the second electronic device within a period of time meets a threshold condition, the first electronic device may identify the first application and the second application as applications that are mutually kept alive abnormally. When the quantity of times the first application on the first electronic device launches the second application on the second electronic device within the period of time does not meet the foregoing threshold condition, the first electronic device may determine that the first application and the second application are not applications that are mutually kept alive abnormally.

In another example, after receiving the message indicating that the second application stops running and the related information of the current invocation, the management and control identification module may alternatively determine, by using the big data platform in the foregoing embodiments, whether the first application and the second application are applications that are mutually kept alive abnormally. For example, after receiving the message indicating that the second application stops running and the related information of the current invocation, the management and control identification module may send the related information of the first application and/or the second application to the big data platform, and the big data platform identifies whether the first application and the second application are applications that are mutually kept alive abnormally. The big data platform may feed back an identification result to the management and control identification module of the first electronic device, and the management and control identification module may reject or allow, based on the identification result, the first application to launch the second application again in a cross-device manner.

In this embodiment of this application, when the management and control identification module determines, based on the received message indicating that the second application stops running and the related information of the current invocation, that the first application and the second application are not applications that are mutually kept alive abnormally, the management and control identification module may allow the behavior, performed by the first application, of launching the second application again in a cross-device manner. Alternatively, the management and control identification module may further identify, based on the manners described in the foregoing embodiments, the behavior of launching the second application again in a cross-device manner by the first application, and reject or allow, based on the identification result, the first application to launch the second application again in a cross-device manner.

In this embodiment of this application, after a local application launches a peer application in a cross-device manner, a local distributed module detects a running status of the peer application, to determine, based on a received message indicating that the peer application stops running and a behavior whether the local application launches the peer application again in a cross-device manner, whether the local application and the peer application are applications that are mutually kept alive abnormally. In this way, applications that are mutually kept alive abnormally can be identified accurately. For applications that are mutually kept alive abnormally, electronic devices can also timely terminate a cross-device invocation behavior of the applications, thereby reducing adverse impact caused by mutual abnormal keepalive of the applications on normal use of the electronic devices and the applications.

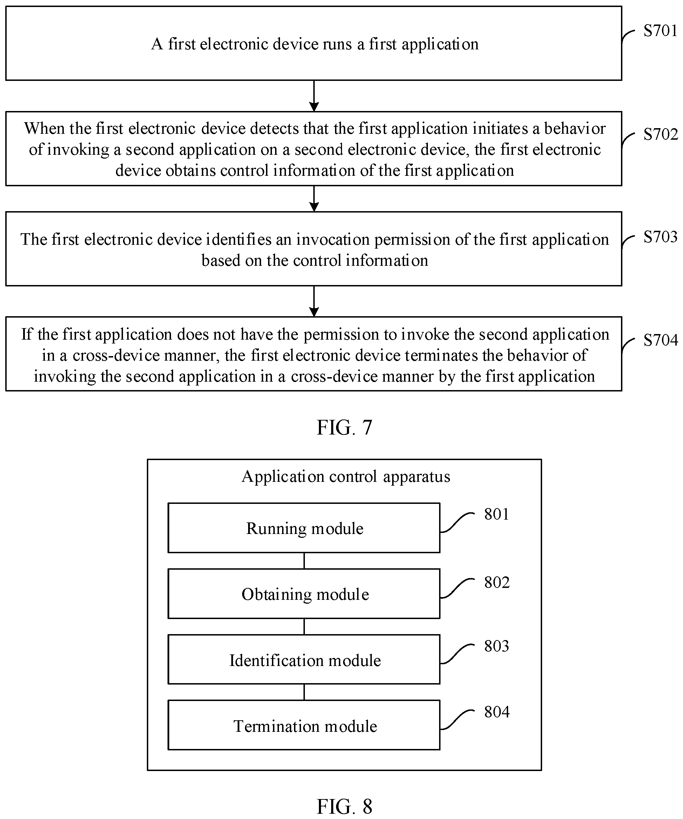

With reference to the foregoing embodiments, FIG. 7 is a schematic flowchart of steps of an application control method according to an embodiment of this application. The method may specifically include the following steps.

S701: A first electronic device runs a first application.

In this embodiment of this application, the first electronic device may be the first electronic device in embodiments corresponding to FIG. 4, FIG. 5, or FIG. 6, and the first application is installed on the first electronic device. According to application of this method, the first electronic device may locally run the first application. In a running process of the first application, the first electronic device may detect a running behavior of the first application. For example, the first electronic device may detect whether the first application initiates a behavior of invoking a second application on a second electronic device in a cross-device manner. The second electronic device may be an electronic device that interworks with the first electronic device in a cross-device manner. For example, the second electronic device may be the second electronic device in embodiments corresponding to FIG. 4, FIG. 5, or FIG. 6.

That the first electronic device detects a running behavior of the first application may be implemented by using a distributed module of the first electronic device.

S702: When the first electronic device detects that the first application initiates a behavior of invoking the second application on the second electronic device, the first electronic device obtains control information of the first application.

When the distributed module of the first electronic device detects that the first application initiates the behavior of invoking the second application on the second electronic device in a cross-device manner, the first electronic device may obtain the control information of the first application.

In a possible implementation of this embodiment of this application, the control information that is of the first application and that is obtained by the first electronic device may be related information obtained by a management and control identification module when the first application invokes the second application on the second electronic device in the embodiment corresponding to FIG. 4. The related information may be sent by the distributed module of the first electronic device to the local management and control identification module.

S703: The first electronic device identifies an invocation permission of the first application based on the control information.

In this embodiment of this application, that the first electronic device identifies an invocation permission of the first application based on the control information may mean that the first electronic device determines, based on the control information, whether to allow the first application to invoke the second application on the second electronic device in a cross-device manner.

In a possible implementation of this embodiment of this application, the first electronic device may form a rule set based on the control information, and then perform matching based on the rule set in the embodiment corresponding to FIG. 4, to determine, based on a matching result, whether the first application has the permission to invoke the second application in a cross-device manner. In an example, when a processing result corresponding to a rule set that is hit through matching performed based on the rule set formed based on the control information is "the first application at the initiating end is not allowed to invoke the second application in a cross-device manner", for example, the rule set that is hit through matching performed based on the rule set formed based on the control information is the rule set N-1 in the embodiment corresponding to FIG. 4, it indicates that the first application on the first electronic device does not have the permission to invoke the second application on the second electronic device in a cross-device manner. When a processing result corresponding to a rule set that is hit through matching performed based on the rule set formed based on the control information is "the first application at the initiating end is allowed to invoke the second application in a cross-device manner", for example, the rule set that is hit through matching performed based on the rule set formed based on the control information is the rule set N-3 in the embodiment corresponding to FIG. 4, it indicates that the first application on the first electronic device has the permission to invoke the second application on the second electronic device in a cross-device manner. In another possible implementation of this embodiment of this application, that the first electronic device identifies an invocation permission of the first application based on the control information may alternatively be implemented based on the embodiment corresponding to FIG. 5: The related information of the first application is sent to a big data platform, to obtain identification information of the big data platform, to determine, based on the identification information, whether the first application has the permission to invoke the second application in a cross-device manner. In an example, when the identification information fed back by the big data platform to the first electronic device is that the first application is an abnormal application, it may indicate that the first application on the first electronic device does not have the permission to invoke the second application on the second electronic device in a cross-device manner; or when the identification information fed back by the big data platform to the first electronic device is that the first application is a non-abnormal application, it may indicate that the first application on the first electronic device has the permission to invoke the second application on the second electronic device in a cross-device manner.

In still another possible implementation of this embodiment of this application, the first electronic device may alternatively identify, based on the embodiment corresponding to FIG. 6 and the control information, whether the first application and the second application are applications that are mutually kept alive abnormally, to determine, based on an identification result, whether the first application has the permission to invoke the second application in a cross-device manner. In an example, when the first electronic device identifies that the first application and the second application are applications that are mutually kept alive abnormally, it may indicate that the first application on the first electronic device does not have the permission to invoke the second application on the second electronic device in a cross-device manner; or when the first electronic device identifies that the first application and the second application are not applications that are mutually kept alive abnormally, it may indicate that the first application on the first electronic device has the permission to invoke the second application on the second electronic device in a cross-device manner.

S704: If the first application does not have the permission to invoke the second application in a cross-device manner, the first electronic device terminates the behavior of invoking the second application in a cross-device manner by the first application.

In this embodiment of this application, if the first application does not have the permission to invoke the second application in a cross-device manner, the first electronic device may terminate the behavior of invoking the second application in a cross-device manner by the first application, and reject the first application to invoke the second electronic device in a cross-device manner at a current moment. In addition, if the first application has the permission to invoke the second application in a cross-device manner, the first electronic device may continue to perform the behavior of invoking the second application in a cross-device manner by the first application, and allow the first application to invoke the second electronic device in a cross-device manner at a current moment.

In embodiments of this application, functional modules of a terminal device may be obtained through division based on the foregoing method examples. For example, each functional module may be obtained through division in correspondence to each function, or one or more functions may be integrated into one functional module. The integrated module may be implemented in a form of hardware, or may be implemented in a form of software functional module. It should be noted that, module division in embodiments of this application is an example, and is merely a logical function division. In actual implementation, there may be another division manner. An example in which each functional module is obtained through division based on each corresponding function is used below for description.

In correspondence to the foregoing embodiments, FIG. 8 is a block diagram of a structure of an application control apparatus according to an embodiment of this application. The apparatus may be applied to the first electronic device in the foregoing embodiments. The apparatus may specifically include a running module 801, an obtaining module 802, an identification module 803, and a termination module 804.

The running module 801 is configured to run a first application on a first electronic device.

The obtaining module 802 is configured to: when the first electronic device detects an invocation behavior of the first application to a second application on a second electronic device, obtain control information of the first application.

The identification module 803 is configured to identify an invocation permission of the first application based on the control information.

The termination module 804 is configured to: when the first application does not have the permission to invoke the second application, terminate the invocation behavior of the first application to the second application.

In this embodiment of this application, the obtaining module 802 may be specifically configured to: when the first electronic device detects the invocation behavior of the first application to the second application on the second electronic device, obtain related information of the invocation behavior; and determine the control information based on the related information.

For example, the related information may include one or more types of the following information: a device identifier of the first electronic device, a package name of the first application, a component name of the first application, a device identifier of the second electronic device, a package name of the second application, and a component name of the second application. The control information may include one or more of the following: status information about whether the first application is run in a foreground or a background; information about whether the first application is the same as the second application; information about whether the first electronic device and the second electronic device are networked under a same account; and whether an interface for the first application to access the first electronic device and an interface for the second application to access the second electronic device each are an interface provided by a device control center of an operating system.

In this embodiment of this application, the identification module 803 may be specifically configured to: obtain a rule set, where any rule set has a corresponding processing result; perform matching on the rule set based on the control information; and identify the invocation permission of the first application based on a processing result corresponding to a matched rule set.

The rule set may include information indicating a security level of the first electronic device, and at least one type of control information indicating a status of the first application and/or the first electronic device.

In this embodiment of this application, the processing result corresponding to any rule set may include a first processing result or a second processing result. The identification module 803 may be further configured to: when the processing result corresponding to the matched rule set is the first processing result, identify that the first application does not have the permission to invoke the second application; or when a processing result corresponding to the matched rule set is the second processing result, identify that the first application has the permission to invoke the second application.

In a possible implementation of this embodiment of this application, the obtaining module 802 may be further configured to: when the first electronic device detects the invocation behavior of the first application to the second application on the second electronic device, send related information of the first application to a big data platform, where the related information may include a package name of the first application and/or a component name of the first application; and receive the control information fed back by the big data platform. The big data platform may include an application distribution platform and/or a system management platform.

In this embodiment of this application, the control information fed back by the big data platform may include first control information or second control information. The identification module 803 may be further configured to: when the control information fed back by the big data platform is the first control information, identify that the first application does not have the permission to invoke the second application, where the first control information is information indicating that the first application identified by the big data platform based on running information of the first application is an abnormal application; or when the control information fed back by the big data platform is the second control information, identify that the first application has the permission to invoke the second application, where the second control information is information indicating that the first application identified by the big data platform based on running information of the first application is not an abnormal application, and the running information may include running information of the first application on a plurality of electronic devices.

In a possible implementation of this embodiment of this application, the application control apparatus may further include a detection module, an association relationship identification module, and a processing module.

The detection module may be configured to: after the first electronic device detects the invocation behavior of the first application to the second application on the second electronic device, detect a running status of the second application; and when receiving a message indicating that the second application stops running, detect an invocation behavior that is initiated again by the first application to the second application.

The association relationship identification module may be configured to identify an association relationship between the first application and the second application based on the detected invocation behavior.

The processing module may be configured to process, based on the association relationship, the invocation behavior that is initiated again by the first application.

In this embodiment of this application, the association relationship identification module may be specifically configured to: determine a quantity of times the first application initiates the invocation behavior to the second application within a monitoring time period; and when the quantity of times meets a threshold condition, determine that the first application has the association relationship with the second application; or when the quantity of times does not meet the threshold condition, determine that the first application does not have the association relationship with the second application.

In this embodiment of this application, the processing module may be specifically configured to: when the first application has the association relationship with the second application, terminate the invocation behavior that is initiated again by the first application to the second application; or when the first application does not have the association relationship with the second application, allow the invocation behavior that is initiated again by the first application to the second application.

It should be noted that all related content of the steps in the foregoing method embodiments may be cited in function descriptions of corresponding functional modules. Details are not described herein again.

An embodiment of this application further provides an electronic device. The electronic device may be the first electronic device in the foregoing embodiments. The electronic device includes a memory, a processor, and a computer program that is stored in the memory and that can be run on the processor. When the processor executes the computer program, the application control method in the foregoing embodiments may be implemented.

An embodiment of this application further provides a computer-readable storage medium. The computer-readable storage medium stores computer instructions. When the computer instructions are run on an electronic device, for example, on the first electronic device in the foregoing embodiments, the electronic device may perform the foregoing related method steps to implement the application control method in the foregoing embodiments.

An embodiment of this application further provides a system. The system includes the first electronic device and the second electronic device in the foregoing embodiments. The first electronic device and the second electronic device may establish a communication connection, and the first electronic device may be configured to implement the application control method in the foregoing embodiments.

An embodiment of this application further provides a chip. The chip may be a general-purpose processor, or may be a dedicated processor. The chip includes a processor. The processor is configured to support an electronic device in performing the foregoing related steps, to implement the application control method in the foregoing embodiments.

The chip may be implemented by using the following circuits or devices: one or more field programmable gate arrays (field programmable gate arrays, FPGAs), a programmable logic device (programmable logic device, PLD), a controller, a state machines, gate logic, a discrete hardware component, any other suitable circuit, or any combination of circuits that can perform the functions described throughout this application.

Finally, it should be noted that the foregoing descriptions are merely specific implementations of this application, but are not intended to limit the protection scope of this application. Any variation or replacement within the technical scope disclosed in this application shall fall within the protection scope of this application.

## Claims

1. An application control method, comprising:
running, by a first electronic device, a first application;
detecting, by the first electronic device, an invocation behavior of the first application to a second application on a second electronic device, and obtaining control information of the first application;
identifying, by the first electronic device, an invocation permission of the first application based on the control information; and
when the first application does not have the permission to invoke the second application, terminating, by the first electronic device, the invocation behavior of the first application to the second application.

2. The method according to claim 1, wherein the detecting, by the first electronic device, an invocation behavior of the first application to a second application on a second electronic device, and obtaining control information of the first application comprises:
detecting, by the first electronic device, the invocation behavior of the first application to the second application on the second electronic device, and obtaining related information of the invocation behavior; and
determining, by the first electronic device, the control information based on the related information.

3. The method according to claim 2, wherein the related information comprises one or more types of the following information:
a device identifier of the first electronic device, a package name of the first application, a component name of the first application, a device identifier of the second electronic device, a package name of the second application, and a component name of the second application.

4. The method according to any one of claims 1 to 3, wherein the control information comprises one or more of the following:
status information about whether the first application is run in a foreground or a background;
information about whether the first application is the same as the second application;
information about whether the first electronic device and the second electronic device are networked under a same account; and
whether an interface for the first application to access the first electronic device and an interface for the second application to access the second electronic device each are an interface provided by a device control center of an operating system.

5. The method according to any one of claims 1 to 4, wherein the identifying, by the first electronic device, an invocation permission of the first application based on the control information comprises:
obtaining, by the first electronic device, a rule set, wherein any rule set has a corresponding processing result;
performing, by the first electronic device, matching on the rule set based on the control information; and
identifying, by the first electronic device, the invocation permission of the first application based on the processing result corresponding to the matched rule set.

6. The method according to claim 5, wherein the rule set comprises information indicating a security level of the first electronic device, and at least one type of control information indicating a status of the first application and/or the first electronic device.

7. The method according to claim 5 or 6, wherein the processing result corresponding to any rule set comprises a first processing result or a second processing result, and the identifying, by the first electronic device, the invocation permission of the first application based on the processing result corresponding to the matched rule set comprises:
when the processing result corresponding to the matched rule set is the first processing result, identifying, by the first electronic device, that the first application does not have the permission to invoke the second application; or
when the processing result corresponding to the matched rule set is the second processing result, identifying, by the first electronic device, that the first application has the permission to invoke the second application.

8. The method according to claim 1, wherein the detecting, by the first electronic device, an invocation behavior of the first application to a second application on a second electronic device, and obtaining control information of the first application comprises:
detecting, by the first electronic device, the invocation behavior of the first application to the second application on the second electronic device, and sending related information of the first application to a big data platform, wherein the related information comprises a package name of the first application and/or a component name of the first application; and
receiving, by the first electronic device, the control information fed back by the big data platform.

9. The method according to claim 8, wherein the control information fed back by the big data platform comprises first control information or second control information, and the identifying, by the first electronic device, an invocation permission of the first application based on the control information comprises:
when the control information fed back by the big data platform is the first control information, identifying, by the first electronic device, that the first application does not have the permission to invoke the second application, wherein the first control information is information indicating that the first application identified by the big data platform based on running information of the first application is an abnormal application; or
when the control information fed back by the big data platform is the second control information, identifying, by the first electronic device, that the first application has the permission to invoke the second application, wherein the second control information is information indicating that the first application identified by the big data platform based on running information of the first application is not an abnormal application, and the running information comprises running information of the first application on a plurality of electronic devices.

10. The method according to claim 8 or 9, wherein the big data platform comprises an application distribution platform and/or a system management platform.

11. The method according to any one of claims 1 to 10, wherein after the detecting, by the first electronic device, an invocation behavior of the first application to a second application on a second electronic device, the method further comprises:
receiving, by the first electronic device, a message indicating that the second application stops running;
detecting, by the first electronic device, an invocation behavior that is initiated again by the first application to the second application;
identifying, by the first electronic device, an association relationship between the first application and the second application based on the detected invocation behavior; and
processing, by the first electronic device based on the association relationship, the invocation behavior that is initiated again by the first application.

12. The method according to claim 11, wherein the identifying, by the first electronic device, an association relationship between the first application and the second application based on the detected invocation behavior comprises:
determining, by the first electronic device, a quantity of times the first application initiates the invocation behavior to the second application within a monitoring time period; and
when the quantity of times meets a threshold condition, determining, by the first electronic device, that the first application has the association relationship with the second application; or
when the quantity of times does not meet the threshold condition, determining, by the first electronic device, that the first application does not have the association relationship with the second application.

13. The method according to claim 12, wherein the processing, by the first electronic device based on the association relationship, the invocation behavior that is initiated again by the first application comprises:
when the first application has the association relationship with the second application, terminating, by the first electronic device, the invocation behavior that is initiated again by the first application to the second application; or
when the first application does not have the association relationship with the second application, allowing, by the first electronic device, the invocation behavior that is initiated again by the first application to the second application.

14. An electronic device, comprising a memory, a processor, and a computer program that is stored in the memory and that can be run on the processor, wherein when the processor executes the computer program, the application control method according to any one of claims 1 to 13 is implemented.

15. A system, comprising a first electronic device and at least one second electronic device, wherein the first electronic device is configured to implement the application control method according to any one of claims 1 to 13.

16. A computer-readable storage medium, wherein the computer-readable storage medium stores computer instructions; and when the computer instructions are run on an electronic device, the electronic device is enabled to perform the application control method according to any one of claims 1 to 13.
